# EUROPEAN PATENT APPLICATION

(11) **EP 4 851 680 A1**
(43) Date of publication of application: **09.12.2026**
(21) Application number: 25748287.7
(22) Date of filing: 22.01.2025
(51) Int. Cl.: G02B 1/04, C08F 2/48, C08F 20/10, C08F 22/10, C08J 7/00, G02C 7/02

(54) **PHOTOCURABLE RESIN COMPOSITION, OPTICAL MOLDED PRODUCT, AND METHOD FOR PRODUCING OPTICAL MOLDED PRODUCT**

(30) Priority: 31.01.2024 JP 2024012839; 31.01.2024 JP 2024012880; 22.04.2024 JP 2024069282
(71) Applicant: Mitsui Chemicals, Inc., Tokyo 104-0028 (JP)
(72) Inventor: TATENO Kotaro, Tokyo 104-0028 (JP); TSUKADA Yuichi, Tokyo 104-0028 (JP); MIYAO Hiroshi, Tokyo 104-0028 (JP); NAGATA Kei, Tokyo 104-0028 (JP); YAMAMOTO Shingo, Tokyo 104-0028 (JP)
(74) Representative: Hoffmann Eitle
(86) International application number: PCT/JP2025/001955
(87) International publication number: WO 2025/164479

(57) **Abstract**

A photocurable resin composition that can be used for an optical molded body, in which an organic radical residual ratio, which is calculated according to a predetermined method, for the photocurable resin composition is 20.0% or less.

## Description

### TECHNICAL FIELD

The present invention relates to a photocurable resin composition, an optical molded body, and a method for manufacturing an optical molded body.

### BACKGROUND ART

In recent years, from the viewpoint of heat resistance and low birefringence, a thermoplastic resin or an ultraviolet-curable resin composition has been studied for an optical system lens. Among these, a methacrylic resin composition which is a thermoplastic resin has been studied. Examples of the methacrylic resin composition include those described in Patent Document 1 and Patent Document 2.

Patent Document 1 discloses a methacrylic resin composition intended to provide high heat resistance, highly controlled birefringence, high light transmittance in a long optical path, and excellent color tone and transparency, the methacrylic resin composition including a methacrylic resin having at least a structural unit derived from an N-substituted maleimide monomer in a main chain, in which a glass transition temperature is higher than 120°C and 160°C or lower, a melt viscosity under conditions of a shear rate of 1,000 sec⁻¹ at a resin temperature of 270°C is 250 Pa·sec or less, an absolute value of a photoelastic coefficient is 1 × 10⁻¹² Pa⁻¹ or less, and in a solution obtained by dissolving the resin composition at 20 mass/volume% (w/v%) in chloroform, a light transmittance measured under conditions of an optical path length of 100 mm and a wavelength of 470 nm is 94% or more, and a light transmittance measured under conditions of a wavelength of 700 nm is 96% or more.

Patent Document 2 discloses a photocurable composition which is rapidly curable, is free from anaerobic curing, has low viscosity, has little odor, and has excellent storage stability, and that is intended to provide a photocurable composition in which a cured product obtained therefrom is excellent in properties required for lenses, such as colorless transparency, low optical distortion, heat resistance, low water absorption, toughness, and high hardness, a photocurable composition containing a tricyclodecane skeleton di(meth)acrylate (A), a trifunctional or tetrafunctional secondary thiol (B), a cleavage-type photopolymerization initiator (C), and a hindered phenol-based antioxidant (D), in which the photocurable composition does not contain a primary thiol, and a content ratio (weight ratio) of the components (A), (B), (C), and (D) is in the following range. $Component \left(A\right) / component \left(B\right) = 75 / 25 to 95 / 5$
Component (C): 2 to 10 parts by weight with respect to 100 parts by weight of the total of components (A) and (B)
Component (D): 0.1 to 1 part by weight with respect to 100 parts by weight of the total of components (A) and (B)

### RELATED DOCUMENT

### PATENT DOCUMENT

Patent Document 1: Japanese Unexamined Patent Publication No. 2019-35015
Patent Document 2: Japanese Unexamined Patent Publication No. 2022-32186

### SUMMARY OF THE INVENTION

### TECHNICAL PROBLEM

A first embodiment of the present invention provides a photocurable resin composition capable of reducing coloration of an optical molded body.

In addition, a second embodiment of the present invention provides a method for manufacturing an optical molded body, which is capable of reducing coloration of an optical molded body.

### SOLUTION TO PROBLEM

The present inventors have conducted intensive studies in order to achieve the object of the first embodiment. As a result, the present inventors have found that the residual organic radical of the photocurable resin composition, which is measured under specific conditions, is related to the coloration of the obtained optical molded body. As a result of further intensive studies based on the above findings, the present inventors have found that the coloration of the optical molded body can be reduced by using a photocurable resin composition having an organic radical residual ratio of 20.0% or less, thereby completing the first embodiment of the present invention.

[1A] A photocurable resin composition capable of being used for an optical molded body,
wherein an organic radical residual ratio, which is calculated for the photocurable resin composition according to the following <method for calculating organic radical residual ratio>, is 20.0% or less.

### <Method for calculating organic radical residual ratio>

An organic radical residual ratio is calculated by the following expression (1) using
an organic radical amount A₀ measured for a first cured film prepared using the photocurable resin composition according to the following <cured film preparation conditions> and measured according to the following <initial organic radical amount measurement>, and
an organic radical amount A₁ measured for the first cured film according to the following <post-heating organic radical amount measurement>. (1): $Organic radical residual ratio {R}_{10} \left(%\right) = 100 \times {A}_{1} / {A}_{0}$

### <Cured film preparation conditions>

A 3 mm-thick silicone sheet (material: silicone rubber, hardness: 50 degrees) having a size of 50 mm × 50 mm and a circular hole with a diameter of 35 mmφ is placed on a 0.7 mm-thick alkali-free glass having a size of 50 mm × 50 mm, the circular hole portion is filled with the photocurable resin composition, a 0.7 mm-thick alkali-free glass having a size of 50 mm × 50 mm is further placed thereon, the resulting stack (laminate) is placed on a stainless-steel lab jack and the height is adjusted, the photocurable resin composition is irradiated with LED light having a wavelength of 405 nm for 3 minutes under a condition of 810 mW from above the alkali-free glass, the laminate is turned over, the photocurable resin composition is irradiated with LED light having a wavelength of 405 nm for 3 minutes under a condition of 810 mW, the laminate is allowed to cool at 23°C for 30 minutes, and a cured product of the photocurable resin composition is released from the alkali-free glass and the silicone sheet to obtain a cured film.

### <Initial organic radical amount measurement>

A first sample is collected from the first cured film in an amount of 7 mg within 1 hour or more and 2 hours or less after the completion of the LED light irradiation, and
the organic radical amount A₀ at a measurement temperature of 23°C is measured by an electron spin resonance method (ESR) using the first sample according to the following <ESR measurement conditions> after 1 hour from the collection of the first sample.

### <Post-heating organic radical amount measurement>

After the completion of the <initial organic radical amount measurement>, the temperature of an electron spin resonance device is raised to 120°C over 10 minutes in a state where the first sample is held inside the electron spin resonance device, the first sample is heated at 120°C for 10 minutes, and
the organic radical amount A₁ at a measurement temperature of 120°C is measured by the electron spin resonance method (ESR) using the first sample according to the following <ESR measurement conditions> after the heating of the first sample.

### <ESR measurement conditions>

Device: electron spin resonance device
Resonance frequency: 9.2 GHz
Microwave input: 1 mW
Central magnetic field: 327.0 mT
Sweep width: ±15 mT
Modulation frequency: 100 kHz (modulation width: 1.0 mT)
Sweep time: 2 minutes
Time constant: 0.03 seconds
Sample tube: sample tube of tip portion quartz corresponding to X band
External standard: Mn²⁺ standard sample supported on magnesium oxide
External standard memory: 850.0
Measurement temperature: 23°C and 120°C
Measurement atmosphere: air
Sample: 7 mg

[2A] The photocurable resin composition according to [1A],
wherein in the <post-heating organic radical amount measurement>, the organic radical amount A₁ is a normalized organic radical amount A_{1S} calculated by Expression (2), and the normalized organic radical amount A_{1S} is 50.0 or less. (2): 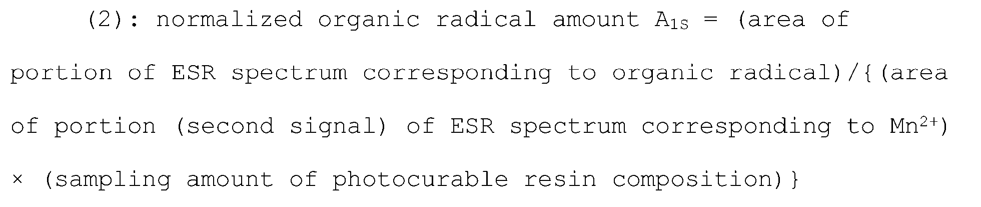 normalized organic radical amount A1S = (area of portion of ESR spectrum corresponding to organic radical)/{(area of portion (second signal) of ESR spectrum corresponding to Mn2+) × (sampling amount of photocurable resin composition)}

[3A] The photocurable resin composition according to [1A] or [2A],
wherein the photocurable resin composition contains one or two or more selected from the group consisting of a monofunctional (meth)acrylate monomer and a bifunctional or higher functional (meth)acrylate monomer.

[4A] The photocurable resin composition according to [3A],
wherein a content of the bifunctional or higher functional (meth)acrylate monomer is 5.0 parts by mass or more and 90 parts by mass or less in a case where a total content of the monofunctional (meth)acrylate monomer and the bifunctional or higher functional (meth)acrylate monomer is set to 100 parts by mass.

[5A] The photocurable resin composition according to [3A] or [4A],
wherein a mass ratio of a content of the monofunctional (meth)acrylate monomer to a content of the bifunctional or higher functional (meth)acrylate monomer is 0.50 or more and 10.0 or less.

[6A] The photocurable resin composition according to any one of [3A] to [5A],
wherein the monofunctional (meth)acrylate monomer has an alicyclic skeleton.

[7A] The photocurable resin composition according to any one of [3A] to [6A],
wherein the bifunctional or higher functional (meth)acrylate monomer has an alicyclic skeleton.

[8A] The photocurable resin composition according to any one of [3A] to [7A],
wherein the bifunctional or higher functional (meth)acrylate monomer has a linear hydrocarbon skeleton.

[9A] The photocurable resin composition according to any one of [1A] to [8A],
wherein in a case where a cured film prepared according to the <cured film preparation conditions> using the photocurable resin composition is heated at 120°C for 10 minutes, a yellowness index (YI value) measured in accordance with ASTM E313-73 is 8.50 or less.

[10A] The photocurable resin composition according to any one of [1A] to [9A],
wherein the photocurable resin composition further contains an antioxidant.

[11A] The photocurable resin composition according to any one of [1A] to [10A],
wherein the photocurable resin composition further contains a photopolymerization initiator.

[12A] The photocurable resin composition according to [11A],
wherein the photopolymerization initiator includes a photoradical polymerization initiator.

[13A] The photocurable resin composition according to any one of [1A] to [12A],
wherein the photocurable resin composition further contains a light stabilizer.

[14A] The photocurable resin composition according to any one of [1A] to [13A],
wherein the photocurable resin composition is capable of being used in a casting method.

[15A] The photocurable resin composition according to any one of [1A] to [14A],
wherein the photocurable resin composition is capable of being used for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

[16A] An optical molded body comprising a cured product of the photocurable resin composition according to any one of [1A] to [15A].

[17A] The optical molded body according to [16A],
wherein the optical molded body includes a lens.

[18A] The optical molded body according to [17A],
wherein the lens includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

[19A] The optical molded body according to [16A],
wherein the optical molded body includes a cover display.

[20A] The optical molded body according to [19A],
wherein the cover display includes one or two or more selected from the group consisting of a cover display for a virtual reality device, a cover display for a mixed reality device, a cover display for an augmented reality device, a cover display for a cross-reality device, and a cover display for a head-mounted display.

[21A] The optical molded body according to any one of [16A] to [20A],
wherein a maximum thickness portion is 20 mm or less.

[22A] The optical molded body according to any one of [16A] to [21A],
wherein a maximum thickness portion is 1.0 mm or more.

In addition, the present inventors have conducted intensive studies in order to achieve the object of the second embodiment. As a result, it has been found that, in the method for manufacturing an optical molded body, the treatment on the optical molded body after photocuring is related to the coloration of the obtained optical molded body. As a result of further intensive studies based on the above findings, the present inventors have found that the coloration of the optical molded body can be reduced by including a step of heating the optical molded body after photocuring in the method for manufacturing an optical molded body, and have completed the second embodiment of the present invention.

A method for manufacturing an optical molded body, including:
a curing step of preparing an optical molded body by irradiating a photocurable resin composition with light to cure the photocurable resin composition; and
a heating step of reducing coloration of the optical molded body by heating the optical molded body.

[2B] The method for manufacturing an optical molded body according to [1B],
wherein a glass transition temperature of the photocurable resin composition is 100°C or higher.

[3B] The method for manufacturing an optical molded body according to [1B] or [2B],
wherein in the heating step, a heating temperature for heating the optical molded body is 80°C or higher.

[4B] The method for manufacturing an optical molded body according to any one of [1B] to [3B],
wherein in the heating step, a heating temperature for heating the optical molded body is lower than a glass transition temperature of the photocurable resin composition + 20°C.

[5B] The method for manufacturing an optical molded body according to any one of [1B] to [4B],
wherein in the heating step, a heating time for heating the optical molded body is 1 minute or more.

[6B] The method for manufacturing an optical molded body according to any one of [1B] to [5B],
wherein a ratio YI₂/YI₁ of a yellowness index YI₂ of the optical molded body after the heating step, which is measured in accordance with ASTM E313-73, to a yellowness index YI₁ of the optical molded body before the heating step, which is measured in accordance with ASTM E313-73, is 0.900 or less.

[7B] The method for manufacturing an optical molded body according to any one of [1B] to [6B], further comprising:
a step of molding the optical molded body by a casting method.

[8B] The method for manufacturing an optical molded body according to any one of [1B] to [7B],
wherein the photocurable resin composition contains one or two or more selected from the group consisting of a monofunctional (meth)acrylate monomer and a bifunctional or higher functional (meth)acrylate monomer.

[9B] The method for manufacturing an optical molded body according to [8B],
wherein in the photocurable resin composition, a content of the bifunctional or higher functional (meth)acrylate monomer is 5.0 parts by mass or more and 150 parts by mass or less in a case where a total content of the monofunctional (meth)acrylate monomer and the bifunctional or higher functional (meth)acrylate monomer is set to 100 parts by mass.

[10B] The method for manufacturing an optical molded body according to [8B] or [9B],
wherein in the photocurable resin composition, a mass ratio of a content of the monofunctional (meth)acrylate monomer to a content of the bifunctional or higher functional (meth)acrylate monomer is 0.50 or more and 10.0 or less.

[11B] The method for manufacturing an optical molded body according to any one of [8B] to [10B],
wherein the monofunctional (meth)acrylate monomer has an alicyclic skeleton.

[12B] The method for manufacturing an optical molded body according to any one of [8B] to [11B],
wherein the bifunctional or higher functional (meth)acrylate monomer has an alicyclic skeleton.

[13B] The method for manufacturing an optical molded body according to any one of [8B] to [12B],
wherein the bifunctional or higher functional (meth)acrylate monomer has a linear hydrocarbon skeleton.

[14B] The method for manufacturing an optical molded body according to any one of [1B] to [13B],
wherein the photocurable resin composition further contains an antioxidant.

[15B] The method for manufacturing an optical molded body according to any one of [1B] to [14B],
wherein the photocurable resin composition further contains a photopolymerization initiator.

[16B] The method for manufacturing an optical molded body according to [15B],
wherein the photopolymerization initiator contains a photoradical polymerization initiator.

[17B] The method for manufacturing an optical molded body according to any one of [1B] to [16B],
wherein the photocurable resin composition further contains a light stabilizer.

[18B] The method for manufacturing an optical molded body according to any one of [1B] to [17B],
wherein the optical molded body includes a lens.

[19B] The method for manufacturing an optical molded body according to [18B],
wherein the lens includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

[20B] The method for manufacturing an optical molded body according to any one of [1B] to [19B],
wherein a maximum thickness portion of the optical molded body is 20 mm or less.

[21B] The method for manufacturing an optical molded body according to any one of [1B] to [20B],
wherein a maximum thickness portion of the optical molded body is 1.0 mm or more.

### ADVANTAGEOUS EFFECTS OF INVENTION

According to the first embodiment of the present invention, it is possible to provide a photocurable resin composition capable of reducing the coloration of an optical molded body.

In addition, according to the second embodiment of the present invention, it is possible to provide a method for manufacturing an optical molded body capable of reducing the coloration of an optical molded body.

### DESCRIPTION OF EMBODIMENTS

The notation of "(meth)acrylate" in the present specification represents a concept including both acrylate and methacrylate. The same applies to similar notations such as "(meth)acryloyl".

For each component of each embodiment, one type may be used, or two or more types may be used in combination. In addition, "to" representing a numerical range represents "or more" and "or less", and includes both the upper limit value and the lower limit value.

### <<First Embodiment>>

Hereinafter, a photocurable resin composition and an optical molded body according to a first embodiment of the present invention will be described.

### (Photocurable resin composition)

In the first embodiment, the photocurable resin composition (hereinafter, also simply referred to as a "resin composition" as appropriate) is a photocurable resin composition that can be used for an optical molded body.

In the photocurable resin composition according to the first embodiment, an organic radical residual ratio calculated according to the following <method for calculating organic radical residual ratio> is 20.0% or less.

### <Method for calculating organic radical residual ratio>

An organic radical residual ratio is calculated by the following expression (3) using
an organic radical amount A₀ measured for a first cured film prepared using the photocurable resin composition according to the following <cured film preparation conditions> and measured according to the following <initial organic radical amount measurement>, and
an organic radical amount A₁ measured for the first cured film according to the following <post-heating organic radical amount measurement>. (3): $Organic radical residual ratio {R}_{10} \left(%\right) = 100 \times {A}_{1} / {A}_{0}$

### <Cured film preparation conditions>

A silicone sheet (material: silicone rubber, hardness: 50 degrees) having a thickness of 3 mm and a size of 50 mm × 50 mm, in which a circular hole having a diameter of 35 mmφ is formed, is placed on alkali-free glass having a thickness of 0.7 mm and a size of 50 mm × 50 mm. Next, the circular hole portion is filled with the photocurable resin composition, and then alkali-free glass having a thickness of 0.7 mm and a size of 50 mm × 50 mm is further placed thereon. Next, the alkali-free glass and the silicone sheet are placed on a stainless-steel lab jack, and a height is adjusted. Next, the photocurable resin composition is irradiated with LED light having a wavelength of 405 nm for 3 minutes under a condition of 810 mW from above the alkali-free glass, and then turned over, and the photocurable resin composition is irradiated with LED light having a wavelength of 405 nm for 3 minutes under a condition of 810 mW. After the irradiation with the LED light, the cured product of the laminate is allowed to cool at 23°C for 30 minutes, and the cured product is released from the alkali-free glass and the silicone sheet to obtain a cured film.

### <Initial organic radical amount measurement>

A first sample of 7 mg is collected from the first cured film within 1 hour or more and 2 hours or less after the LED light irradiation is completed. After 1 hour from the collection of the first sample, the organic radical amount A₀ at a measurement temperature of 23°C is measured by an electron spin resonance method (ESR) according to the following <ESR measurement conditions> using the first sample.

### <Post-heating organic radical amount measurement>

After the completion of the <initial organic radical amount measurement>, the temperature of an electron spin resonance device is raised to 120°C over 10 minutes in a state where the first sample is held inside the electron spin resonance device, the first sample is heated at 120°C for 10 minutes. After the heating of the first sample, the organic radical amount A₁ at a measurement temperature of 120°C is measured by an electron spin resonance method (ESR) according to the following <ESR measurement conditions> using the first sample.

### <ESR measurement conditions>

Device: electron spin resonance device
Resonance frequency: 9.2 GHz
Microwave input: 1 mW
Central magnetic field: 327.0 mT
Sweep width: ±15 mT
Modulation frequency: 100 kHz (modulation width: 1.0 mT)
Sweep time: 2 minutes
Time constant: 0.03 seconds
Sample tube: sample tube of tip portion quartz corresponding to X band
External standard: Mn²⁺ standard sample supported on magnesium oxide
External standard memory: 850.0
Measurement temperature: 23°C and 120°C
Measurement atmosphere: air
Sample: 7 mg

The photocurable resin composition according to the first embodiment has the above-described configuration, and thus the coloration of the optical molded body can be reduced.

The photocurable resin composition contains, for example, a polymerizable compound. From the viewpoint of further reducing the coloration of the optical molded body, the polymerizable compound preferably contains a (meth)acrylate monomer (A).

The properties of the photocurable resin composition are not particularly limited. However, from the viewpoint of suitability for forming an optical molded body by molding using an injection method or a casting method, the photocurable resin composition is preferably in a liquid state.

In addition, from the viewpoint of improving a degree of freedom in designing the optical molded body, the photocurable resin composition is preferably used for molding by a casting method.

Next, specific examples of the constitutional components of the photocurable resin composition will be described.

The photocurable resin composition may be composed of a polymerizable compound, or may contain a component other than the polymerizable compound. The photocurable resin composition may contain one or two or more selected from the group consisting of an antioxidant (B), a photopolymerization initiator (C), and a light stabilizer (D), which will be described later, as specific examples of other components.

### <Polymerizable compound>

The polymerizable compound may be a compound having a polymerizable functional group, and is preferably a compound having a radically polymerizable functional group. From the viewpoint of further reducing the coloration of the optical molded body, examples of the radically polymerizable functional group include a (meth)acryloyl group. From the viewpoint of further reducing the coloration of the optical molded body, the polymerizable compound preferably contains a (meth)acrylate monomer (A).

### <(Meth)acrylate monomer (A)>

The (meth)acrylate monomer (A) is a compound having a (meth)acryloyl group. The (meth)acrylate monomer (A) is a molecule capable of being bonded to other molecules by the radical polymerization of the (meth)acryloyl group.

From the viewpoint of improving the strength of the optical molded body obtained by the photocurable resin composition, the (meth)acrylate monomer (A) preferably contains one or two or more selected from the group consisting of a monofunctional (meth)acrylate monomer (A1) and a bifunctional or higher functional (meth)acrylate monomer (A2).

From the viewpoint of improving the crack resistance during the molding of the optical molded body, the content of the bifunctional or higher functional (meth)acrylate monomer (A2) in the photocurable resin composition according to the first embodiment is preferably 5.0 parts by mass or more, more preferably 10 parts by mass or more, still more preferably 12 parts by mass or more, even still more preferably 15 parts by mass or more, and even still more preferably 18 parts by mass or more, in a case where the total content of the monofunctional (meth)acrylate monomer (A1) and the bifunctional or higher functional (meth)acrylate monomer (A2) is set to 100 parts by mass.

From the viewpoint of further reducing the coloration of the optical molded body, the content of the bifunctional or higher functional (meth)acrylate monomer (A2) is preferably 90 parts by mass or less, more preferably 70 parts by mass or less, still more preferably 50 parts by mass or less, even still more preferably 40 parts by mass or less, and even still more preferably 35 parts by mass or less, in a case where the total content of the monofunctional (meth)acrylate monomer (A1) and the bifunctional or higher functional (meth)acrylate monomer (A2) is set to 100 parts by mass.

From the viewpoint of improving the crack resistance during the molding of the optical molded body and the viewpoint of further reducing the coloration of the optical molded body, the content of the bifunctional or higher functional (meth)acrylate monomer (A2) is preferably 5.0 parts by mass or more and 90 parts by mass or less, more preferably 10 parts by mass or more and 70 parts by mass or less, still more preferably 12 parts by mass or more and 50 parts by mass or less, even still more preferably 15 parts by mass or more and 40 parts by mass or less, and even still more preferably 18 parts by mass or more and 35 parts by mass or less, in a case where the total content of the monofunctional (meth)acrylate monomer (A1) and the bifunctional or higher functional (meth)acrylate monomer (A2) is set to 100 parts by mass.

From the viewpoint of further reducing the coloration of the optical molded body, the mass ratio of the content of the monofunctional (meth)acrylate monomer (A1) to the content of the bifunctional or higher functional (meth)acrylate monomer (A2) in the photocurable resin composition according to the first embodiment is preferably 0.50 or more and 10.0 or less, more preferably 1.00 or more and 8.00 or less, still more preferably 1.50 or more and 6.00 or less, even still more preferably 1.80 or more and 5.00 or less, and even still more preferably 2.00 or more and 4.50 or less.

### <Monofunctional (meth)acrylate monomer (A1)>

The monofunctional (meth)acrylate monomer (A1) includes, for example, one or two or more selected from the group consisting of an aromatic ring monofunctional (meth)acrylate; an alicyclic monofunctional (meth)acrylate; a chain (or chain-type) monofunctional (meth)acrylate such as a linear monofunctional (meth)acrylate (for example, including a monofunctional (meth)acrylate monomer having a linear hydrocarbon skeleton) and a branched monofunctional (meth)acrylate.

The monofunctional (meth)acrylate monomer (A1) preferably includes one or two or more selected from the group consisting of isobornyl (meth)acrylate, dicyclopentanyl (meth)acrylate (for example, GM81HDA, manufactured by Qualipoly Chemical Corporation), 3,3,5-trimethylcyclohexyl (meth)acrylate, 4-tert-butylcyclohexyl (meth)acrylate, dicyclopentenyl (meth)acrylate (for example, FA-511AS, manufactured by Hitachi Chemical Co., Ltd.), dicyclopentenyloxyethyl (meth)acrylate, tetrahydrofurfuryl (meth)acrylate, 2-hydroxyethyl (meth)acrylate, 4-hydroxybutyl (meth)acrylate, isobutyl (meth)acrylate, t-butyl (meth)acrylate, isooctyl (meth)acrylate, 2-methoxyethyl (meth)acrylate, methoxytriethylene glycol (meth)acrylate, 2-ethoxyethyl (meth)acrylate, 3-methoxybutyl (meth)acrylate, ethoxyethyl (meth)acrylate, butoxyethyl (meth)acrylate, ethoxydiethylene glycol (meth)acrylate, methoxydihexylethyl (meth)acrylate, ethyldiglycol (meth)acrylate, cyclic trimethylolpropane formal mono(meth)acrylate, imide (meth)acrylate, isoamyl (meth)acrylate, ethoxylated succinic acid (meth)acrylate, trifluoroethyl (meth)acrylate, ω-carboxypolycaprolactone mono(meth)acrylate, cyclohexyl (meth)acrylate, 2-(2-ethoxyethoxy)ethyl (meth)acrylate, stearyl (meth)acrylate, isostearyl (meth)acrylate (for example, S-1800A, manufactured by Shin-Nakamura Chemical Co., Ltd.), diethylene glycol monobutyl ether (meth)acrylate, lauryl (meth)acrylate (for example, LA, manufactured by OSAKA ORGANIC CHEMICAL INDUSTRY LTD.), isodecyl (meth)acrylate, octyl/decyl (meth)acrylate, tridecyl (meth)acrylate, caprolactone (meth)acrylate, ethoxylated (4) nonylphenol (meth)acrylate, methoxypolyethylene glycol (350) mono(meth)acrylate, methoxypolyethylene glycol (550) mono(meth)acrylate, phenoxyethyl (meth)acrylate, benzyl (meth)acrylate, methylphenoxyethyl (meth)acrylate, caprolactone- modified tetrahydrofurfuryl (meth)acrylate, tribromophenyl (meth)acrylate, ethoxylated tribromophenyl (meth)acrylate, 2-phenoxyethyl (meth)acrylate, an ethylene oxide adduct of 2-phenoxyethyl (meth)acrylate, a propylene oxide adduct of 2-phenoxyethyl (meth)acrylate, phenoxydiethylene glycol (meth)acrylate, 2-hydroxy-3-phenoxypropyl (meth)acrylate, 3-methacryloyloxymethylcyclohexene oxide, 3-(meth)acryloyloxymethylcyclohexene oxide, ethoxylated-o-phenylphenol (meth)acrylate (for example, A-LEN-10, manufactured by Shin-Nakamura Chemical Co., Ltd.), 2-methacryloyloxy-2-methyladamantane, and 2-methacryloyloxy-2-ethyladamantane.

From the viewpoint of further reducing the coloration of the optical molded body, the monofunctional (meth)acrylate monomer (A1) preferably includes one or two or more selected from the group consisting of lauryl (meth)acrylate and dicyclopentanyl (meth)acrylate.

From the viewpoint of further reducing the coloration of the optical molded body, the monofunctional (meth)acrylate monomer (A1) preferably has an alicyclic skeleton. From the viewpoint of further reducing the coloration of the optical molded body, the monofunctional (meth)acrylate monomer (A1) more preferably includes dicyclopentanyl (meth)acrylate, and still more preferably includes dicyclopentanyl methacrylate.

### <Bifunctional or higher functional (meth)acrylate monomer (A2)>

The bifunctional or higher functional (meth)acrylate monomer (A2) preferably includes one or two or more selected from the group consisting of an alicyclic bifunctional (meth)acrylate monomer and a linear bifunctional (meth)acrylate monomer.

The alicyclic bifunctional (meth)acrylate monomer is a bifunctional (meth)acrylate monomer having an alicyclic hydrocarbon structure in the molecular structure. From the viewpoint of improving heat resistance, the number of carbon atoms in the alicyclic hydrocarbon structure is preferably 4 or more and 14 or less, more preferably 5 or more and 12 or less, and still more preferably 6 or more and 10 or less.

The alicyclic hydrocarbon structure may be a saturated hydrocarbon structure or an unsaturated hydrocarbon structure. From the viewpoint of improving heat resistance, the alicyclic hydrocarbon structure is preferably a saturated hydrocarbon structure.

In addition, the alicyclic hydrocarbon structure may be a monocyclic hydrocarbon structure, or may be a polycyclic hydrocarbon structure such as a condensed ring-type hydrocarbon structure or a bridged hydrocarbon structure. The alicyclic bifunctional (meth)acrylate monomer may include a group having the alicyclic hydrocarbon structure in the molecular structure, and preferably includes a divalent group having the alicyclic hydrocarbon structure.

Specific examples of the monocyclic hydrocarbon group include a group having a cycloalkane structure, such as a cyclohexylene group and a cyclohexyl group; and a group having a cycloalkene skeleton, such as a cyclodecatrienediyl group and a cyclodecatrienyl group.

Specific examples of the polycyclic hydrocarbon group include a group having a dicyclopentadiene skeleton, such as a tricyclodecane diyl group, a dicyclopentanyl group, and a dicyclopentenyl group; a group having a norbornane skeleton, such as a norbornane diyl group, an isobornane diyl group, a norbornyl group, and an isobornyl group; and a group having an adamantane skeleton, such as an adamantane diyl group and an adamantyl group.

From the viewpoint of further reducing the coloration of the optical molded body, the cyclic hydrocarbon group in the alicyclic bifunctional (meth)acrylate monomer is preferably a group having a dicyclopentadiene skeleton.

In addition, from the viewpoint of reducing the curing shrinkage during the molding of the optical molded body, the alicyclic bifunctional (meth)acrylate monomer preferably includes tricyclodecane dimethanol di(meth)acrylate, more preferably is tricyclodecane dimethanol di(meth)acrylate, and still more preferably is tricyclodecane dimethanol dimethacrylate (for example, DCP, manufactured by Shin-Nakamura Chemical Co., Ltd.).

The linear bifunctional (meth)acrylate monomer is a (meth)acrylate having a linear structure in the molecular structure and having two (meth)acryloyl groups.

From the viewpoint of improving the crack resistance during the molding of the optical molded body, the linear structure preferably includes a divalent linear hydrocarbon group. From the viewpoint of reducing the deviation in the amount of liquid due to the volatilization of the monomer during the molding of the optical molded body, the number of carbon atoms in the divalent linear hydrocarbon group is, for example, 1 or more, preferably 2 or more, and more preferably 4 or more. In addition, from the viewpoint of improving heat resistance, the number of carbon atoms in the divalent linear hydrocarbon group is preferably 20 or less, and more preferably 14 or less.

Specific examples of the linear bifunctional (meth)acrylate monomer include a di(meth)acrylate of an alkanediol.

The linear bifunctional (meth)acrylate monomer preferably includes one or two or more selected from the group consisting of 1,6-hexanediol di(meth)acrylate (for example, A-HD-N, manufactured by Shin-Nakamura Chemical Co., Ltd.; HD-N, manufactured by Shin-Nakamura Chemical Co., Ltd.), 1,9-nonanediol di(meth)acrylate (for example, A-NOD-N, manufactured by Shin-Nakamura Chemical Co., Ltd.; Light Acrylate 1,9ND-A, manufactured by KYOEISHA CHEMICAL Co., Ltd.; NOD-N, manufactured by Shin-Nakamura Chemical Co., Ltd.; Light Acrylate 1,9-ND-M, manufactured by KYOEISHA CHEMICAL Co., Ltd.), 1,10-decanediol di(meth)acrylate (for example, A-DOD-N, manufactured by Shin-Nakamura Chemical Co., Ltd.; DOD-N, manufactured by Shin-Nakamura Chemical Co., Ltd.), 1,12-dodecanediol di(meth)acrylate (for example, DDD, manufactured by Shin-Nakamura Chemical Co., Ltd.; SR262, manufactured by Arkema S.A.), ethylene glycol di(meth)acrylate (for example, SR206NS, manufactured by Arkema S.A.), triethylene glycol di(meth)acrylate (for example, SR272, manufactured by Arkema S.A.), polyethylene glycol di(meth)acrylate (for example, A-400, manufactured by Shin-Nakamura Chemical Co., Ltd.), 1,3-butanediol di(meth)acrylate (for example, BG, manufactured by Shin-Nakamura Chemical Co., Ltd.), and 1,4-butanediol di(meth)acrylate (for example, BD, manufactured by Shin-Nakamura Chemical Co., Ltd.).

From the viewpoint of reducing the cracks generated in the optical molded body, the linear bifunctional (meth)acrylate monomer more preferably includes one or two or more (meth)acrylates selected from the group consisting of 1,12-dodecanediol di(meth)acrylate and 1,9-nonanediol di(meth)acrylate.

From the viewpoint of further reducing the coloration of the optical molded body, the bifunctional or higher functional (meth)acrylate monomer (A2) preferably has an alicyclic skeleton. From the viewpoint of further reducing the coloration of the optical molded body, the bifunctional or higher functional (meth)acrylate monomer (A2) more preferably includes tricyclodecane dimethanol di(meth)acrylate, and still more preferably includes tricyclodecane dimethanol dimethacrylate.

From the viewpoint of further reducing the coloration of the optical molded body, the bifunctional or higher functional (meth)acrylate monomer (A2) preferably has a linear hydrocarbon skeleton. From the viewpoint of further reducing the coloration of the optical molded body, the bifunctional or higher functional (meth)acrylate monomer (A2) more preferably includes 1,12-dodecanediol di(meth)acrylate, and still more preferably includes 1,12-dodecanediol dimethacrylate.

### <Antioxidant (B)>

The photocurable resin composition according to the first embodiment may further contain an antioxidant (B). The antioxidant (B) is not particularly limited, and a known antioxidant can be used. The antioxidant (B) includes, for example, one or two or more selected from the group consisting of a phenol-based antioxidant, a phosphorus-based antioxidant, a sulfur-based antioxidant, a hindered amine-based antioxidant, and a thioether-based antioxidant.

Examples of the phenol-based antioxidant include 2,6-di-t-butylhydroxytoluene and pentaerythritol tetrakis[3-(3,5-di-tert-butyl-4-hydroxyphenyl)propionate].

Examples of a commercially available product of the phenol-based antioxidant include ADEKA STAB series AO-20, AO-30, AO-40, AO-50, AO-60, and AO-80 manufactured by ADEKA Corporation.

Examples of the phosphorus-based antioxidant include phosphines such as trialkylphosphine and triarylphosphine, trialkyl phosphite, and triaryl phosphite.

Examples of a commercially available product of the phosphorus-based antioxidant include ADEKA STAB series PEP-4C, PEP-8, PEP-24G, PEP-36, HP-10, 260, 522A, 329K, 1178, 1500, 135A, and 3010 manufactured by ADEKA Corporation.

Examples of sulfur-based antioxidant include dilauryl 3,3-thiodipropionate, dimyristyl 3,3'-thiodipropionate, distearyl 3,3-thiodipropionate, lauryl stearyl 3,3-thiodipropionate, pentaerythritol-tetrakis-(β-lauryl-thio-propionate), 3,9-bis(2-dodecylthioethyl)-2,4,8,10-tetraoxaspiro[5,5]undecane, and the like.

Examples of the hindered amine-based antioxidant include bis(1,2,2,6,6-pentamethyl-4-piperidinyl)sebacate, methyl(1,2,2,6,6-pentamethyl-4-piperidinyl)sebacate, 2,4-bis[N-butyl-N-(1-cyclohexyloxy-2,2,6,6-tetramethylpiperidine-4-yl)amino]-6-(2-hydroxyethylamino)-1,3,5-triazine, decanedioic acid bis(2,2,6,6-tetramethyl-1-(octyloxy)-4-piperidinyl)ester, sebacic acid bis(1,2,2,6,6-pentamethyl-4-piperidyl), and the like.

Examples of a commercially available product of the hindered amine-based antioxidant include hindered amine-based antioxidants such as ADEKA STAB series AL-72 manufactured by ADEKA Corporation and TINUVIN series 111FDL, 123, 144, 152, 292, and 5100 manufactured by BASF.

Examples of the thioether-based antioxidant include 3,3'-thiobispropionic acid ditridecyl and bis[3-(dodecylthio)propionic acid] 2,2-bis[[3-(dodecylthio)-1-oxopropyloxy]methyl]-1,3-propanediyl.

Examples of a commercially available product of the thioether-based antioxidant include ADEKA STAB series AO-26, AO-412S, and AO-503A manufactured by ADEKA Corporation.

From the viewpoint of further reducing the coloration of the optical molded body, the antioxidant (B) preferably includes one or two or more selected from the group consisting of a phenol-based antioxidant and a thioether-based antioxidant. From the viewpoint of further reducing the coloration of the optical molded body, the antioxidant (B) more preferably includes one or two or more selected from the group consisting of bis[3-(dodecylthio)propionic acid] 2,2-bis[[3-(dodecylthio)-1-oxopropyloxy]methyl]-1,3-propanediyl (for example, ADEKA STAB AO-412S, manufactured by ADEKA Corporation) and pentaerythritol tetrakis[3-(3,5-di-tert-butyl-4-hydroxyphenyl)propionate] (for example, ADEKA STAB AO-60, manufactured by ADEKA Corporation).

From the viewpoint of further reducing the coloration of the optical molded body, the content of the antioxidant (B) in the photocurable resin composition of the first embodiment is preferably 0.010 parts by mass or more and 10 parts by mass or less, more preferably 0.050 parts by mass or more and 5.0 parts by mass or less, still more preferably 0.10 parts by mass or more and 3.0 parts by mass or less, even still more preferably 0.20 parts by mass or more and 2.0 parts by mass or less, and even still more preferably 0.50 parts by mass or more and 1.5 parts by mass or less with respect to 100 parts by mass of the (meth)acrylate monomer (A).

From the viewpoint of further reducing the coloration of the optical molded body, the content of the antioxidant (B) in the photocurable resin composition of the first embodiment is preferably 0.010% by mass or more and 5.0% by mass or less, more preferably 0.050% by mass or more and 4.0% by mass or less, still more preferably 0.10% by mass or more and 3.0% by mass or less, even still more preferably 0.50% by mass or more and 2.0% by mass or less, and even still more preferably 0.90% by mass or more and 1.0% by mass or less, in a case where the total amount of solid contents in the photocurable resin composition (the total amount of components remaining as solid substances in a case of being cured into a cured product) is set to 100% by mass.

### <Photopolymerization initiator (C)>

The photocurable resin composition of the first embodiment may further contain a photopolymerization initiator (C). The photopolymerization initiator (C) is not particularly limited, and a known polymerization initiator can be used.

From the viewpoint of stably forming the optical molded body at a low temperature, the photopolymerization initiator (C) preferably includes a photoradical polymerization initiator. The photoradical polymerization initiator is a compound that generates a radical upon irradiation with ultraviolet rays or visible light.

Examples of the photoradical polymerization initiator include an acylphosphine oxide-based initiator, an oxyphenylacetic acid ester-based initiator, a benzoylformic acid-based initiator, and a hydroxyphenyl ketone-based initiator.

Examples of the photopolymerization initiator (C) include benzophenone, Michler's ketone, 4,4'- bis(diethylamino)benzophenone, xanthone, thioxanthone, isopropylxanthone, 2,4-diethylthioxanthone, 2-ethylanthraquinone, acetophenone, 2-hydroxy-2-methyl-4'-isopropylpropionophenone, isopropylbenzoin ether, isobutylbenzoin ether, 2,2-diethoxyacetophenone, 2,2-dimethoxy-2-phenylacetophenone, camphorquinone, benzanthrone, ethyl 4-dimethylaminobenzoate, isoamyl 4-dimethylaminobenzoate, 4,4'-di(t-butylperoxycarbonyl)benzophenone, 3,4,4'-tri(t-butylperoxycarbonyl)benzophenone, 3,3',4,4'-tetra(t-butylperoxycarbonyl)benzophenone, 3,3',4,4'-tetra(t-hexylperoxycarbonyl)benzophenone, 3,3'-di(methoxycarbonyl)-4,4'-di(t-butylperoxycarbonyl)benzophenone, 3,4'-di(methoxycarbonyl)-4,3'-di(t-butylperoxycarbonyl)benzophenone, 4,4'-di(methoxycarbonyl)-3,3'-di(t-butylperoxycarbonyl)benzophenone, 2-(4'-methoxystyryl)-4,6-bis(trichloromethyl)-s-triazine, 2-(3',4'-dimethoxystyryl)-4,6-bis(trichloromethyl)-s-triazine, 2-(2',4'-dimethoxystyryl)-4,6-bis(trichloromethyl)-s-triazine, 2-(2'-methoxystyryl)-4,6-bis(trichloromethyl)-s-triazine, 2-(4'-pentyloxystyryl)-4,6-bis(trichloromethyl)-s-triazine, 4-[p-N,N-di(ethoxycarbonylmethyl)]-2,6-di(trichloromethyl)-s-triazine, 1,3-bis(trichloromethyl)-5-(2'-chlorophenyl)-s-triazine, 1,3-bis(trichloromethyl)-5-(4'-methoxyphenyl)-s-triazine, 2-(p-dimethylaminostyryl)benzoxazole, 2-(p-dimethylaminostyryl)benzothiazole, 2-mercaptobenzothiazole, 3,3'-carbonylbis(7-diethylaminocoumarin), 2-(o-chlorophenyl)-4,4',5,5'-tetraphenyl-1,2'-biimidazole, 2,2'-bis(2-chlorophenyl)-4,4',5,5'-tetrakis(4-ethoxycarbonylphenyl)-1,2'-biimidazole, 2,2'-bis(2,4-dichlorophenyl)-4,4',5,5'-tetraphenyl-1,2'-biimidazole, 2,2'-bis(2,4-dibromophenyl)-4,4',5,5'-tetraphenyl-1,2'-biimidazole, 2,2'-bis(2,4,6-trichlorophenyl)-4,4',5,5'-tetraphenyl-1,2'-biimidazole, 3-(2-methyl-2-dimethylaminopropionyl)carbazole, 3,6-bis(2-methyl-2-morpholinopropionyl)-9-n-dodecylcarbazole, bis(η5-2,4-cyclopentadiene-1-yl)-bis(2,6-difluoro-3-(1H-pyrrole-1-yl)-phenyl) titanium, 1-hydroxycyclohexylphenyl ketone, 2-hydroxy-2-methyl-1-phenyl-1-propanone, 1-[4-(2-hydroxyethoxy)-phenyl]-2-hydroxy-2-methyl-1-propanone, 2-hydroxy-1-{4-[4-(2-hydroxy-2-methyl-propionyl)-benzyl]phenyl}-2-methyl-1-propanone, 2-methyl-1-[4-(methylthio)phenyl]-2-morpholino-1-propanone, 2-(dimethylamino)-1-(4-morpholinophenyl)-2-benzyl-1-butanone, 2-(dimethylamino)-2-[(4-methylphenyl)methyl]-1-[4-(4-morpholinyl)phenyl]-1-butanone, oxy-phenyl-acetic acid 2-[2-oxo-2-phenyl-acetoxy-ethoxy]-ethyl ester, oxy-phenyl-acetic acid 2-[2-hydroxy-ethoxy]-ethyl ester, methyl benzoylformate, bis(2,4,6-trimethylbenzoyl)phenylphosphine oxide, 2,4,6-trimethylbenzoyldiphenylphosphine oxide, 2,4,6-trimethylbenzoyldiphenylphosphinic acid ester, 1-[4-(phenylthio)phenyl]-1,2-octanedione 2-(O-benzoyloxime), 1-[9-ethyl-6-(2-methylbenzoyl)-9H-carbazole-3-yl]-ethanone-1-(O-acetyloxime), and the like.

From the viewpoint of further reducing the coloration of the optical molded body, the photopolymerization initiator (C) preferably includes a hydroxyphenyl ketone-based initiator, and more preferably includes 1-hydroxycyclohexylphenyl ketone (for example, Omnirad 184, manufactured by IGM Resins B.V.).

From the viewpoint of improving the curability of the photocurable resin composition, the content of the photopolymerization initiator (C) in the photocurable resin composition of the first embodiment is preferably 0.10 parts by mass or more, more preferably 0.50 parts by mass or more, still more preferably 1.0 part by mass or more, even still more preferably 2.0 parts by mass or more, and even still more preferably 3.0 parts by mass or more with respect to 100 parts by mass of the (meth)acrylate monomer (A).

From the viewpoint of improving the uniformity of the thickness of the photocurable resin composition during curing, the content of the photopolymerization initiator (C) in the photocurable resin composition of the first embodiment is preferably 10 parts by mass or less, more preferably 8.0 parts by mass or less, still more preferably 6.0 parts by mass or less, even still more preferably 5.0 parts by mass or less, and even still more preferably 4.5 parts by mass or less with respect to 100 parts by mass of the (meth)acrylate monomer (A).

The content of the photopolymerization initiator (C) in the photocurable resin composition of the first embodiment is preferably 0.10 parts by mass or more and 10 parts by mass or less, more preferably 0.50 parts by mass or more and 8.0 parts by mass or less, still more preferably 1.0 part by mass or more and 6.0 parts by mass or less, even still more preferably 2.0 parts by mass or more and 5.0 parts by mass or less, and even still more preferably 3.0 parts by mass or more and 4.5 parts by mass or less with respect to 100 parts by mass of the (meth)acrylate monomer (A).

From the viewpoint of further reducing the coloration of the optical molded body, the content of the photopolymerization initiator (C) in the photocurable resin composition of the first embodiment is preferably 0.10% by mass or more and 10% by mass or less, more preferably 1.0% by mass or more and 8.0% by mass or less, still more preferably 2.0% by mass or more and 6.0% by mass or less, even still more preferably 3.0% by mass or more and 5.0% by mass or less, and even still more preferably 3.5% by mass or more and 4.0% by mass or less in a case where the total amount of the solid contents in the photocurable resin composition (the total amount of components remaining as solid substances in a case of being cured into a cured product) is set to 100% by mass.

### <Light stabilizer (D)>

The photocurable resin composition of the first embodiment may further contain a light stabilizer (D). The light stabilizer (D) is not particularly limited, and a known light stabilizer can be used. The photocurable resin composition can improve the coloring resistance by containing the light stabilizer (D).

From the viewpoint of further improving the coloring resistance, the light stabilizer (D) preferably includes a hindered amine-based light stabilizer.

Examples of the hindered amine-based light stabilizer include methacrylic acid (1,2,2,6,6-pentamethyl-piperidin-4-yl), decanedioic acid bis(2,2,6,6-tetramethyl-1(octyloxy)-4-piperidinyl) ester, a reaction product of 1,1-dimethylethyl hydroperoxide and octane (70% by mass), and polypropylene (30% by mass), bis(1,2,2,6,6-pentamethyl-4-piperidyl)[[3,5-bis(1,1-dimethylethyl)-4-hydroxyphenyl]methyl]butylmalonate, a mixture of bis(1,2,2,6,6-pentamethyl-4-piperidyl)sebacate and methyl-1,2,2,6,6-pentamethyl-4-piperidyl sebacate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, a mixture of 2,2,6,6-tetramethyl-4-piperidyl-1,2,3,4-butanetetracarboxylate and tridecyl-1,2,3,4-butanetetracarboxylate, and a mixture of 1,2,2,6,6-pentamethyl-4-piperidyl-1,2,3,4-butanetetracarboxylate and tridecyl-1,2,3,4-butanetetracarboxylate.

From the viewpoint of further improving the coloring resistance, the light stabilizer (D) preferably includes 1,2,2,6,6-pentamethyl-4-piperidyl methacrylate (for example, ADEKA STAB LA-82, manufactured by ADEKA Corporation).

From the viewpoint of further reducing the coloration of the optical molded body, the content of the light stabilizer (D) in the photocurable resin composition of the first embodiment is preferably 0.0010% by mass or more, more preferably 0.0050% by mass or more, still more preferably 0.010% by mass or more, even still more preferably 0.050% by mass or more, and even still more preferably 0.090% by mass or more in a case where the total amount of the solid contents in the photocurable resin composition (the total amount of components remaining as a solid in a case of being formed into a cured product) is set to 100% by mass.

From the viewpoint of reducing the bleeding-out, the content of the light stabilizer (D) in the photocurable resin composition of the first embodiment is preferably 1.00% by mass or less, more preferably 0.60% by mass or less, still more preferably 0.50% by mass or less, even still more preferably 0.40% by mass or less, and even still more preferably 0.30% by mass or less in a case where the total amount of the solid contents in the photocurable resin composition (the total amount of components remaining as solid substances in a case of being cured into a cured product) is set to 100% by mass.

From the viewpoint of further reducing the coloration of the optical molded body and the viewpoint of reducing the bleeding-out, the content of the light stabilizer (D) in the photocurable resin composition of the first embodiment is preferably 0.0010% by mass or more and 1.00% by mass or less, more preferably 0.0050% by mass or more and 0.60% by mass or less, still more preferably 0.010% by mass or more and 0.50% by mass or less, even still more preferably 0.050% by mass or more and 0.40% by mass or less, and even still more preferably 0.090% by mass or more and 0.30% by mass or less in a case where the total amount of the solid contents in the photocurable resin composition (the total amount of components remaining as solid substances in a case of being cured into a cured product) is set to 100% by mass.

### <Other components>

The photocurable resin composition may contain one or two or more selected from the group consisting of a filler, a curing accelerator, a plasticizer, a heat stabilizer, a flame retardant, an antistatic agent, an antifoaming agent, a silane coupling agent, an ultraviolet absorber, a surfactant, and a leveling agent as specific examples of other components other than the polymerizable compound (for example, the (meth)acrylate monomer (A)), the antioxidant (B), the photopolymerization initiator (C), and the light stabilizer (D).

### <Method for manufacturing photocurable resin composition>

The photocurable resin composition according to the first embodiment of the present invention can be obtained by mixing the polymerizable compound (for example, the (meth)acrylate monomer (A)) and other components such as the antioxidant (B), the photopolymerization initiator (C), or the light stabilizer (D) as necessary by a known method in the related art.

### <Physical properties of photocurable resin composition>

Next, the physical properties of the photocurable resin composition will be described.

The organic radical residual ratio calculated according to the following <method for calculating organic radical residual ratio (120°C, 10 minutes)> will be described for the photocurable resin composition of the first embodiment.

In the following, the organic radical residual ratio measured according to the following <organic radical residual ratio measurement (120°C, 10 minutes)> in a case where the cured film is heated at 120°C for 10 minutes is also referred to as an organic radical residual ratio R₁₀.

From the viewpoint of reducing the coloration of the optical molded body, the organic radical residual ratio R₁₀ is 20.0% or less, preferably 10.0% or less, more preferably 5.00% or less, still more preferably 4.00% or less, even still more preferably 3.00% or less, even still more preferably 2.50% or less, even still more preferably 2.00% or less, even still more preferably 1.50% or less, even still more preferably 1.00% or less, even still more preferably 0.50% or less, and even still more preferably 0.10% or less.

The lower limit of the organic radical residual ratio R₁₀ is not particularly limited, but may be, for example, 0.00% or more.

From the viewpoint of further reducing the coloration of the optical molded body, the organic radical residual ratio R₁₀ is preferably 0.00% or more and 20.0% or less, more preferably 0.00% or more and 10.0% or less, still more preferably 0.00% or more and 5.00% or less, even still more preferably 0.00% or more and 4.00% or less, even still more preferably 0.00% or more and 3.00% or less, even still more preferably 0.00% or more and 2.50% or less, even still more preferably 0.00% or more and 2.00% or less, even still more preferably 0.00% or more and 1.50% or less, even still more preferably 0.00% or more and 1.00% or less, even still more preferably 0.00% or more and 0.50% or less, and even still more preferably 0.00% or more and 0.10% or less.

### <Method for calculating organic radical residual ratio (120°C, 10 minutes)>

The organic radical amount measured for the first cured film prepared according to the following <cured film preparation conditions> using the photocurable resin composition, which is measured according to the following <initial organic radical amount measurement>, is defined as an organic radical amount A₀.

In addition, the organic radical amount of the first cured film, which is measured according to the following <post-heating organic radical amount measurement (120°C, 10 minutes)>, is defined as an organic radical amount A₁.

The organic radical residual ratio R₁₀ is calculated by the following expression (4) using the organic radical amount A₀ and the organic radical amount A₁. (4): $Organic radical residual ratio {R}_{10} \left(%\right) = 100 \times {A}_{1} / {A}_{0}$

### <Cured film preparation conditions>

A silicone sheet (material: silicone rubber, hardness: 50 degrees) having a thickness of 3 mm and a size of 50 mm × 50 mm, in which a circular hole having a diameter of 35 mmφ is formed, is placed on alkali-free glass having a thickness of 0.7 mm and a size of 50 mm × 50 mm. Next, the circular hole portion is filled with the photocurable resin composition, and then alkali-free glass having a thickness of 0.7 mm and a size of 50 mm × 50 mm is further placed thereon. Next, the alkali-free glass and the silicone sheet are placed on a stainless-steel lab jack, and a height is adjusted. Next, the photocurable resin composition is irradiated with LED light having a wavelength of 405 nm for 3 minutes under a condition of 810 mW from above the alkali-free glass, and then turned over, and the photocurable resin composition is irradiated with LED light having a wavelength of 405 nm for 3 minutes under a condition of 810 mW. After the irradiation with the LED light, the cured product of the laminate is allowed to cool at 23°C for 30 minutes, and the cured product is released from the alkali-free glass and the silicone sheet to obtain a cured film.

Here, the cured film preparation condition of the photocurable resin composition of the first embodiment can more specifically adopt the conditions described in Examples of the first embodiment.

### <Initial organic radical amount measurement>

A first sample of 7 mg is collected from the first cured film within 1 hour or more and 2 hours or less after the LED light irradiation is completed. After 1 hour from the collection of the first sample, the organic radical amount A₀ at a measurement temperature of 23°C is measured by an electron spin resonance method (ESR) using the first sample.

Here, in the first embodiment, the <initial organic radical amount measurement> can be more specifically performed according to the method described in Examples of the first embodiment.

In the <initial organic radical amount measurement> described above, the organic radical amount A₀ may be calculated using a normalized organic radical amount A_{0S} calculated using the following Expression (5). (5): 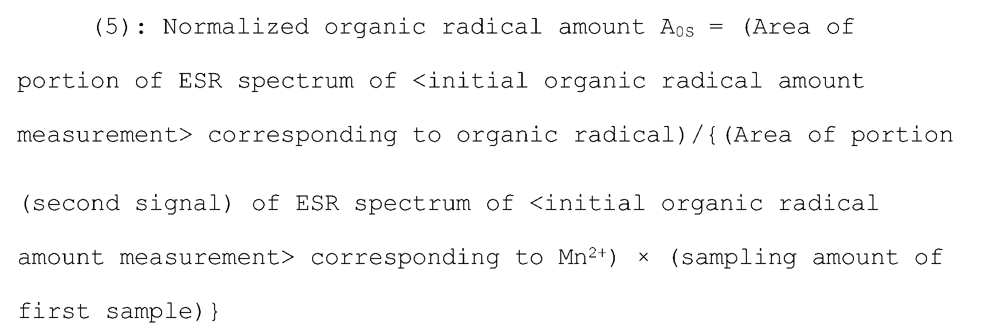 Normalized organic radical amount A0S = (Area of portion of ESR spectrum of <initial organic radical amount measurement> corresponding to organic radical)/{(Area of portion (second signal) of ESR spectrum of <initial organic radical amount measurement> corresponding to Mn2+) × (sampling amount of first sample)}

### <Post-heating organic radical amount measurement (120°C, 10 minutes)>

After the <initial organic radical amount measurement> is completed, the temperature of the following electron spin resonance device is raised to 120°C over 10 minutes in a state where the first sample is held inside the following electron spin resonance device. After the temperature rise, the first sample is heated at 120°C for 10 minutes. After the heating of the first sample, the organic radical amount A₁ at a measurement temperature of 120°C is measured by an electron spin resonance method (ESR) using the first sample.

Here, in the first embodiment, the <post-heating organic radical amount measurement (120°C, 10 minutes)> can be more specifically performed according to the method described in Examples of the first embodiment.

In the <post-heating organic radical amount measurement (120°C, 10 minutes)> described above, the organic radical amount A₁ may be calculated using a normalized organic radical amount A_{1S} calculated using the following Expression (6). (6): 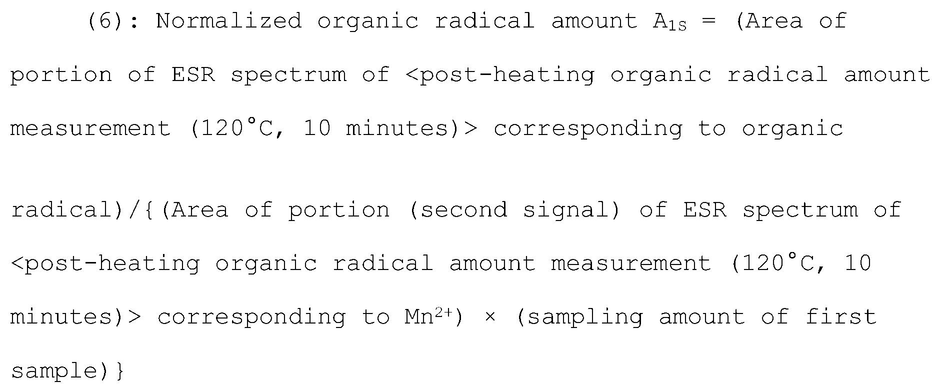 Normalized organic radical amount A1S = (Area of portion of ESR spectrum of <post-heating organic radical amount measurement (120°C, 10 minutes)> corresponding to organic radical)/{(Area of portion (second signal) of ESR spectrum of <post-heating organic radical amount measurement (120°C, 10 minutes)> corresponding to Mn2+) × (sampling amount of first sample)}

From the viewpoint of further reducing the coloration of the optical molded body, the normalized organic radical amount A_{1S} is preferably 75.0 or less, more preferably 50.0 or less, still more preferably 40.0 or less, even still more preferably 30.0 or less, even still more preferably 25.0 or less, even still more preferably 10.0 or less, even still more preferably 5.00 or less, even still more preferably 4.00 or less, even still more preferably 3.00 or less, even still more preferably 2.00 or less, and even still more preferably 1.00 or less.

The normalized organic radical amount A_{1S} is not particularly limited, but may be, for example, 0.00 or more.

From the viewpoint of further reducing the coloration of the optical molded body, the normalized organic radical amount A_{1S} is preferably 0.00 or more and 75.0 or less, more preferably 0.00 or more and 50.0 or less, still more preferably 0.00 or more and 40.0 or less, even still more preferably 0.00 or more and 30.0 or less, even still more preferably 0.00 or more and 25.0 or less, even still more preferably 0.00 or more and 10.0 or less, even still more preferably 0.00 or more and 5.00 or less, even still more preferably 0.00 or more and 4.00 or less, even still more preferably 0.00 or more and 3.00 or less, even still more preferably 0.00 or more and 2.00 or less, and even still more preferably 0.00 or more and 1.00 or less.

The organic radical residual ratio calculated according to the following <method for calculating organic radical residual ratio (120°C, 30 minutes)> will be described for the photocurable resin composition of the first embodiment.

Hereinafter, the organic radical residual ratio measured according to the following <organic radical measurement (120°C, 30 minutes)> in a case where the cured film is heated at 120°C for 30 minutes will also be referred to as an organic radical residual ratio R₃₀.

From the viewpoint of further reducing the coloration of the optical molded body, the organic radical residual ratio R₃₀ is preferably 12.0% or less, more preferably 10.0% or less, still more preferably 5.0% or less, even still more preferably 2.0% or less, and even still more preferably 1.0% or less.

The lower limit of the organic radical residual ratio R₃₀ is not particularly limited, but may be, for example, 0.00% or more.

From the viewpoint of further reducing the coloration of the optical molded body, the organic radical residual ratio R₃₀ is preferably 0.00% or more and 12.0% or less, more preferably 0.00% or more and 10.0% or less, still more preferably 0.00% or more and 5.0% or less, even still more preferably 0.00% or more and 2.0% or less, and even still more preferably 0.00% or more and 1.0% or less.

### <Method for calculating organic radical residual ratio (120°C, 30 minutes)>

The organic radical amount of the second cured film prepared according to the <cured film preparation conditions> using the photocurable resin composition, which is measured according to the <initial organic radical amount measurement (second cured film)>, is defined as an organic radical amount A₂.

In addition, the organic radical amount of the second cured film, which is measured according to the following <post-heating organic radical amount measurement (120°C, 30 minutes)>, is defined as an organic radical amount A₃.

The organic radical residual ratio R₃₀ is calculated by Expression (7) using the organic radical amount A₂ and the organic radical amount A₃. (7): $Organic radical residual ratio {R}_{30} \left(%\right) = 100 \times {A}_{3} / {A}_{2}$

### <Initial organic radical amount measurement (second cured film)>

7 mg of a second sample is collected from the second cured film within 1 hour or more and 2 hours or less after the LED light irradiation is completed. After 1 hour from the collection of the second sample, the organic radical amount A₂ at a measurement temperature of 23°C is measured by an electron spin resonance method (ESR) using the second sample.

Here, in the first embodiment, the <initial organic radical amount measurement (second cured film)> can be more specifically performed according to the method described in Examples of the first embodiment.

In the <initial organic radical amount measurement (second cured film)> described above, the organic radical amount A₂ may be calculated using a normalized organic radical amount A_{2S} calculated using the following Expression (8). (8): 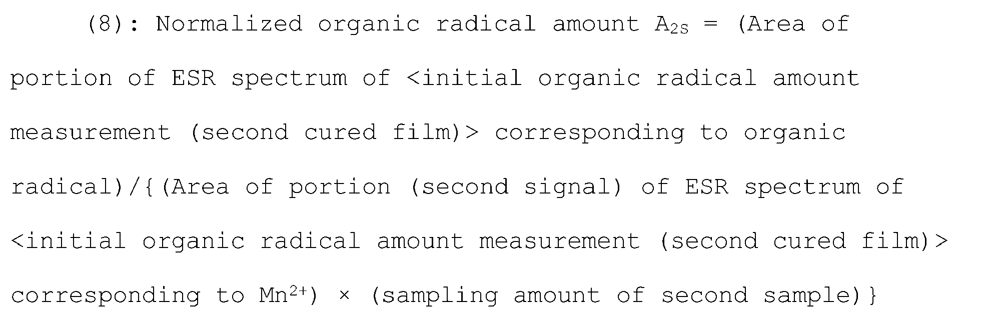 Normalized organic radical amount A2S = (Area of portion of ESR spectrum of <initial organic radical amount measurement (second cured film)> corresponding to organic radical)/{(Area of portion (second signal) of ESR spectrum of <initial organic radical amount measurement (second cured film)> corresponding to Mn2+) × (sampling amount of second sample)}

### <Post-heating organic radical amount measurement (120°C, 30 minutes)>

After the <initial organic radical amount measurement (second cured film)> is completed, the temperature of the electron spin resonance device is raised to 120°C over 10 minutes in a state where the second sample is held inside the electron spin resonance device. After the temperature rise, the second sample is heated at 120°C for 30 minutes. After the heating of the second sample, the organic radical amount A₃ at a measurement temperature of 120°C is measured by an electron spin resonance method (ESR) using the second sample.

Here, in the first embodiment, the <post-heating organic radical amount measurement (120°C, 30 minutes)> can be more specifically performed according to the method described in Examples of the first embodiment.

In the <post-heating organic radical amount measurement (120°C, 30 minutes)> described above, the organic radical amount A₃ may be calculated using a normalized organic radical amount A_{3S} calculated using the following Expression (9). (9): 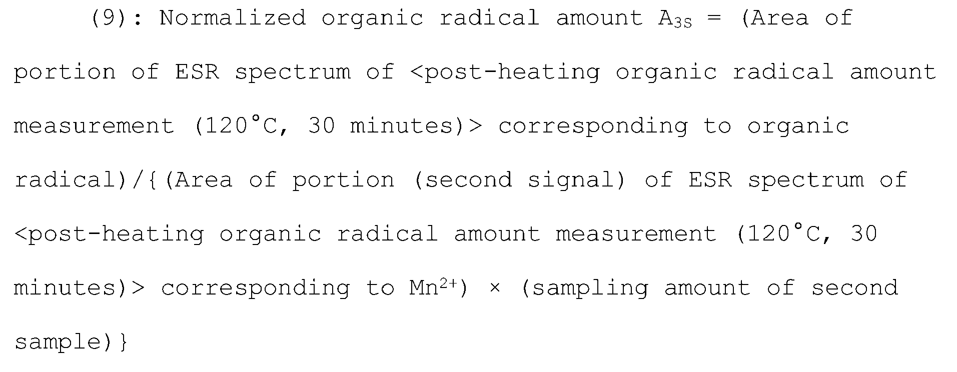 Normalized organic radical amount A3S = (Area of portion of ESR spectrum of <post-heating organic radical amount measurement (120°C, 30 minutes)> corresponding to organic radical)/{(Area of portion (second signal) of ESR spectrum of <post-heating organic radical amount measurement (120°C, 30 minutes)> corresponding to Mn2+) × (sampling amount of second sample)}

From the viewpoint of further reducing the coloration of the optical molded body, the normalized organic radical amount A_{3S} is preferably 30.0 or less, more preferably 20.0 or less, still more preferably 10.0 or less, even still more preferably 5.00 or less, even still more preferably 4.00 or less, even still more preferably 3.00 or less, even still more preferably 2.00 or less, and even still more preferably 1.00 or less.

The normalized organic radical amount A_{3S} is not particularly limited, but may be, for example, 0.00 or more.

From the viewpoint of further reducing the coloration of the optical molded body, the normalized organic radical amount A_{3S} is preferably 0.00 or more and 30.0 or less, more preferably 0.00 or more and 20.0 or less, still more preferably 0.00 or more and 10.0 or less, even still more preferably 0.00 or more and 5.00 or less, even still more preferably 0.00 or more and 4.00 or less, even still more preferably 0.00 or more and 3.00 or less, even still more preferably 0.00 or more and 2.00 or less, and even still more preferably 0.00 or more and 1.00 or less.

In the photocurable resin composition of the first embodiment, the yellowness index (YI value) measured in accordance with ASTM E313-73 in a case where the cured film prepared according to the <cured film preparation conditions> using the photocurable resin composition is heated at 120°C for 10 minutes will be described.

Hereinafter, the YI value in a case where the cured film is heated at 120°C for 10 minutes will also be referred to as a YI value YI₁₀.

From the viewpoint of further reducing the coloration of the optical molded body, the YI value YI₁₀ is preferably 8.50 or less, more preferably 8.00 or less, still more preferably 7.50 or less, even still more preferably 7.00 or less, even still more preferably 6.50 or less, even still more preferably 6.00 or less, even still more preferably 5.50 or less, even still more preferably 5.00 or less, even still more preferably 4.00 or less, even still more preferably 3.00 or less, even still more preferably 2.50 or less, and even still more preferably 2.00 or less.

The lower limit of the YI value YI₁₀ is not particularly limited, but may be, for example, 0.00 or more.

From the viewpoint of further reducing the coloration of the optical molded body, the YI value YI₁₀ is preferably 0.00 or more and 8.50 or less, more preferably 0.00 or more and 8.00 or less, still more preferably 0.00 or more and 7.50 or less, even still more preferably 0.00 or more and 7.00 or less, even still more preferably 0.00 or more and 6.50 or less, even still more preferably 0.00 or more and 6.00 or less, even still more preferably 0.00 or more and 5.50 or less, even still more preferably 0.00 or more and 5.00 or less, even still more preferably 0.00 or more and 4.00 or less, even still more preferably 0.00 or more and 3.00 or less, even still more preferably 0.00 or more and 2.50 or less, and even still more preferably 0.00 or more and 2.00 or less.

In the photocurable resin composition of the first embodiment, the yellowness index (YI value) measured in accordance with ASTM E313-73 in a case where the cured film prepared according to the <cured film preparation conditions> using the photocurable resin composition is heated at 120°C for 30 minutes will be described.

Hereinafter, the YI value in a case where the cured film is heated at 120°C for 30 minutes will also be referred to as a YI value YI₃₀.

From the viewpoint of further reducing the coloration of the optical molded body, the YI value YI₃₀ is preferably 5.00 or less, more preferably 4.50 or less, still more preferably 4.00 or less, even still more preferably 3.50 or less, even still more preferably 3.00 or less, even still more preferably 2.50 or less, and even still more preferably 2.00 or less.

The lower limit of the YI value YI₃₀ is not particularly limited, but may be, for example, 0.00 or more.

From the viewpoint of further reducing the coloration of the optical molded body, the YI value YI₃₀ is preferably 0.00 or more and 5.00 or less, more preferably 0.00 or more and 4.50 or less, still more preferably 0.00 or more and 4.00 or less, even still more preferably 0.00 or more and 3.50 or less, even still more preferably 0.00 or more and 3.00 or less, even still more preferably 0.00 or more and 2.50 or less, and even still more preferably 0.00 or more and 2.00 or less.

### <Uses of photocurable resin composition>

Next, the uses of the photocurable resin composition will be described.

Since the photocurable resin composition of the first embodiment can reduce the coloration of the optical molded body produced by molding from the photocurable resin composition, the photocurable resin composition can be used in a method of forming an optical molded body, such as an injection molding method, a compression molding method, an injection compression molding method, an extrusion molding method, a solution casting method, and a casting method. In particular, the photocurable resin composition of the first embodiment can be used in a casting method.

Since the photocurable resin composition of the first embodiment can reduce the coloration of the optical molded body produced by molding from the photocurable resin composition, the use of the optical molded body produced by molding from the photocurable resin composition is not particularly limited, and the photocurable resin composition can be used for various uses.

The photocurable resin composition of the first embodiment can be used, for example, preferably for a lens. The lens includes, for example, one or two or more selected from the group consisting of a spherical lens, an aspherical lens, a biconvex lens, a flat-convex lens, a convex meniscus lens, a biconcave lens, a plano-concave lens, and a concave meniscus lens.

The photocurable resin composition of the first embodiment can be used, for example, more preferably for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The photocurable resin composition of the first embodiment can be used, for example, preferably for a cover for a display (hereinafter, also referred to as a cover display). The cover display includes, for example, one or two or more selected from the group consisting of a front surface cover display and a full-surface cover display.

The photocurable resin composition of the first embodiment can be used, for example, more preferably for one or two or more cover displays selected from the group consisting of a cover display for a virtual reality device (cover display for a VR device), a cover display for a mixed reality device (cover display for an MR device), a cover display for an augmented reality device (cover display for an AR device), a cover display for a cross-reality device (cover display for an xR device), and a cover display for a head-mounted display (cover display for an HMD).

### (Optical molded body)

The optical molded body of the first embodiment includes a cured product of the photocurable resin composition of the first embodiment. The optical molded body of the first embodiment can be manufactured using the photocurable resin composition of the first embodiment. The optical molded body can be manufactured from the photocurable resin composition of the first embodiment by any method such as an injection molding method, a compression molding method, an injection compression molding method, an extrusion molding method, a solution casting method, and a casting method.

The optical molded body of the first embodiment includes a lens. The lens includes, for example, one or two or more selected from the group consisting of a spherical lens, an aspherical lens, a biconvex lens, a flat-convex lens, a convex meniscus lens, a biconcave lens, a plano-concave lens, and a concave meniscus lens.

The lens of the first embodiment includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The optical molded body of the first embodiment includes a cover for a display (cover display). The cover display includes, for example, one or two or more selected from the group consisting of a front surface cover display and a full-surface cover display.

The cover display of the first embodiment includes one or two or more selected from the group consisting of a cover display for a virtual reality device (cover display for a VR device), a cover display for a mixed reality device (cover display for an MR device), a cover display for an augmented reality device (cover display for an AR device), a cover display for a cross-reality device (cover display for an xR device), and a cover display for a head-mounted display (cover display for an HMD).

The maximum thickness portion of the optical molded body is a portion of the optical molded body where the thickness of the optical member is maximum. The position of the maximum thickness portion of the optical molded body is not particularly limited, and can be appropriately set according to the use application and the like.

For example, in the optical molded body of the first embodiment, the maximum thickness portion is preferably 1.0 mm or more, the maximum thickness portion is more preferably 1.1 mm or more, the maximum thickness portion is still more preferably 1.2 mm or more, the maximum thickness portion is even still more preferably 1.5 mm or more, the maximum thickness portion is even still more preferably 2.0 mm or more, the maximum thickness portion is even still more preferably 3.0 mm or more, the maximum thickness portion is even still more preferably 4.0 mm or more, and the maximum thickness portion is even still more preferably 5.0 mm or more.

For example, in the optical molded body of the first embodiment, the maximum thickness portion is preferably 20.0 mm or less, the maximum thickness portion is more preferably 19.9 mm or less, the maximum thickness portion is still more preferably 19.8 mm or less, the maximum thickness portion is even still more preferably 19.5 mm or less, the maximum thickness portion is even still more preferably 18.0 mm or less, the maximum thickness portion is even still more preferably 17.0 mm or less, the maximum thickness portion is even still more preferably 16.0 mm or less, and the maximum thickness portion is even still more preferably 15.0 mm or less.

For example, in the optical molded body of the first embodiment, the maximum thickness portion is preferably 1.0 mm or more and 20.0 mm or less, the maximum thickness portion is more preferably 1.1 mm or more and 19.9 mm or less, the maximum thickness portion is still more preferably 1.2 mm or more and 19.8 mm or less, the maximum thickness portion is even still more preferably 1.5 mm or more and 19.5 mm or less, the maximum thickness portion is even still more preferably 2.0 mm or more and 19.0 mm or less, the maximum thickness portion is even still more preferably 3.0 mm or more and 18.0 mm or less, the maximum thickness portion is even still more preferably 4.0 mm or more and 17.0 mm or less, the maximum thickness portion is even still more preferably 5.0 mm or more and 16.0 mm or less, and the maximum thickness portion is even still more preferably 5.0 mm or more and 15.0 mm or less.

The photocurable resin composition of the first embodiment can reduce the coloration of the optical molded body, and thus can also be applied to an optical molded body having a thickness of 1.0 mm or more.

### (Optical device)

The optical device of the first embodiment includes the optical molded body of the first embodiment. The type of the optical device of the first embodiment is not particularly limited. Examples of the optical device of the first embodiment include a virtual reality device (VR device), a mixed reality device (MR device), an augmented reality device (AR device), a cross-reality device (xR device), and a head-mounted display (HMD device).

The first embodiment according to the present invention has been described above. However, these are examples of the present invention, and various configurations other than the above can be adopted.

In addition, the present invention is not limited to the first embodiment, and modifications, improvements, and the like within a range that does not impair the effects of the present invention are included in the present invention.

### <<Second embodiment>>

Hereinafter, a method for manufacturing an optical molded body of a second embodiment of the present invention will be described.

### [Method for manufacturing optical molded body]

Hereinafter, each step of the manufacturing method of the second embodiment, raw materials used in the manufacturing method of the second embodiment, and the like will be described.

The method for manufacturing an optical molded body of the second embodiment includes the following steps.
· Curing step: the photocurable resin composition is irradiated with light to be cured, thereby preparing an optical molded body.
· Heating step: the optical molded body is heated to reduce the coloration of the optical molded body.

Since the method for manufacturing an optical molded body of the second embodiment has the above-described configuration, the coloration of the optical molded body can be reduced.

### <Curing step>

In the curing step, the photocurable resin composition is irradiated with light to be cured, thereby preparing an optical molded body. The type and shape of the device used in the curing step are not particularly limited since the type and shape of the device are appropriately changed depending on the properties of the photocurable resin composition used for the optical molded body, the shape of the optical molded body, and the like. In addition, the curing conditions in the curing step (the wavelength of the irradiation light, the intensity of the irradiation light, the irradiation time, the atmosphere during irradiation (the temperature, the humidity, the atmospheric pressure, the type of gas, and the like), and the like) are not particularly limited since the curing conditions are appropriately changed depending on the properties of the photocurable resin composition used for the optical molded body, the shape of the optical molded body, and the like.

The optical molded body of the second embodiment is preferably obtained by irradiating the photocurable resin composition of the second embodiment with LED light to polymerize and cure the photocurable resin composition.

The LED light may be, for example, ultraviolet rays. The ultraviolet rays include ultraviolet C (UVC) having a wavelength of 200 nm or more and 280 nm or less, ultraviolet B (UVB) having a wavelength of 280 nm or more and 315 nm or less, and ultraviolet A (UVA) having a wavelength of 315 nm or more and 405 nm or less.

In a case where ultraviolet rays are used, a light source such as sunlight, a chemical lamp, a mercury lamp, a metal halide lamp, or a UV LED can be used.

From the viewpoint of improving the appearance of the obtained optical molded body, the irradiation intensity of the ultraviolet irradiation is preferably 500 mW or more and 1,000 mW or less, more preferably 700 mW or more and 950 mW or less, still more preferably 750 mW or more and 900 mW or less, and even still more preferably 800 mW or more and 850 mW or less. The irradiation intensity of the ultraviolet rays represents the irradiation intensity of the ultraviolet rays.

From the viewpoint of improving the appearance of the obtained optical molded body, the integrated light quantity of the ultraviolet irradiation is preferably 100 J or more and 500 J or less, more preferably 150 J or more and 400 J or less, still more preferably 200 J or more and 350 J or less, and even still more preferably 250 J or more and 300 J or less. The integrated light quantity of the ultraviolet rays represents the total integrated light quantity of the ultraviolet rays.

### <Heating step>

In the heating step, the optical molded body is heated to reduce the coloration of the optical molded body.

The reason why the coloration of the optical molded body can be reduced by heating the optical molded body is not necessarily clear, but the following reason is presumed.

It is considered that, in the optical molded body after the curing step, the organic radical generated in a case where the photocurable resin composition is cured may remain. It is considered that the coloration of the optical molded body is increased due to the residual organic radical.

Here, it is considered that, by heating the optical molded body after the curing step, the residual organic radical amount in the optical molded body or the chemical structure generated due to the residual organic radical is reduced. Therefore, it is considered that the coloration of the optical molded body can be reduced by heating the optical molded body after the curing step.

In the heating step, the type and shape of the device used in the heating step are appropriately changed according to the properties of the photocurable resin composition used for the optical molded body, the shape of the optical molded body, and the like, and thus are not particularly limited. In addition, the heating conditions (heating means, heating temperature, heating time, temperature rising rate, temperature falling rate, atmosphere during heating (temperature, humidity, atmospheric pressure, type of gas, or the like), or the like) in the heating step are appropriately changed according to the properties of the photocurable resin composition used for the optical molded body, the shape of the optical molded body, and the like, and thus are not particularly limited.

In the heating step, from the viewpoint of further reducing the coloration of the optical molded body, the heating temperature at which the optical molded body is heated is preferably 80°C or higher, more preferably 90°C or higher, still more preferably 100°C or higher, even still more preferably 110°C or higher, and even still more preferably 115°C or higher.

From the viewpoint of further reducing the deformation of the optical molded body, the heating temperature at which the optical molded body is heated in the heating step is preferably lower than the glass transition temperature Tg of the photocurable resin composition + 20°C. From another viewpoint, in the heating step, from the viewpoint of reducing the deformation of the optical molded body, the heating temperature at which the optical molded body is heated is preferably lower than the glass transition temperature Tg of the optical molded body + 20°C.

For example, in a case where the glass transition temperature Tg of the photocurable resin composition is X [°C], from the viewpoint of reducing the deformation of the optical molded body, in the heating step, the heating temperature at which the optical molded body is heated is preferably lower than (X + 20) [°C], more preferably lower than (X + 10) [°C], still more preferably lower than (X + 5) [°C], even still more preferably lower than X [°C], even still more preferably lower than (X - 3) [°C], even still more preferably lower than (X - 5) [°C], even still more preferably lower than (X - 7) [°C], and even still more preferably lower than (X - 10) [°C].

In the heating step, from the viewpoint of further reducing the coloration of the optical molded body, in a case where the glass transition temperature Tg of the photocurable resin composition is X [°C], the temperature at which the optical molded body is heated is preferably 80°C or higher and lower than (X + 20) [°C], more preferably 90°C or higher and lower than (X + 10) [°C], still more preferably 100°C or higher and lower than (X + 5) [°C], even still more preferably 110°C or higher and lower than X [°C], even still more preferably 115°C or higher and lower than (X - 3) [°C], even still more preferably 115°C or higher and lower than (X - 5) [°C], even still more preferably 115°C or higher and lower than (X - 7) [°C], and even still more preferably 115°C or higher and lower than (X - 10) [°C].

In the heating step, from the viewpoint of further reducing the coloration of the optical molded body, the heating time for heating the optical molded body is preferably 1 minute or longer, more preferably 5 minutes or longer, still more preferably 10 minutes or longer, even still more preferably 20 minutes or longer, even still more preferably 30 minutes or longer, even still more preferably 40 minutes or longer, even still more preferably 50 minutes or longer, and even still more preferably 55 minutes or longer.

In the heating step, the upper limit of the heating time for heating the optical molded body is not particularly limited, but is, for example, 120 minutes or shorter, and may be 90 minutes or shorter.

In the heating step, from the viewpoint of further reducing the coloration of the optical molded body, the heating time for heating the optical molded body is preferably 1 minute or longer and 120 minutes or shorter, more preferably 5 minutes or longer and 120 minutes or shorter, still more preferably 10 minutes or longer and 120 minutes or shorter, even still more preferably 20 minutes or longer and 120 minutes or shorter, even still more preferably 30 minutes or longer and 120 minutes or shorter, even still more preferably 40 minutes or longer and 90 minutes or shorter, even still more preferably 50 minutes or longer and 90 minutes or shorter, and even still more preferably 55 minutes or longer and 90 minutes or shorter.

From the viewpoint of further reducing the coloration of the optical molded body, the ratio YI₂/YI₁ of the yellowness index YI₂ of the optical molded body after the heating step, which is measured in accordance with ASTM E313-73, to the yellowness index YI₁ of the optical molded body before the heating step, which is measured in accordance with ASTM E313-73, is preferably 0.900 or less, more preferably 0.800 or less, still more preferably 0.700 or less, even still more preferably 0.650 or less, even still more preferably 0.600 or less, even still more preferably 0.500 or less, even still more preferably 0.400 or less, even still more preferably 0.350 or less, even still more preferably 0.300 or less, even still more preferably 0.250 or less, and even still more preferably 0.200 or less.

The lower limit of the ratio YI₂/YI₁ of the yellowness index YI₂ of the optical molded body after the heating step, which is measured in accordance with ASTM E313-73, to the yellowness index YI₁ of the optical molded body before the heating step, which is measured in accordance with ASTM E313-73, is not particularly limited, but may be, for example, 0.000 or more, 0.001 or more, 0.010 or more, 0.050 or more, or 0.100 or more.

From the viewpoint of further reducing the coloration of the optical molded body, the ratio YI₂/YI₁ of the yellowness index YI₂ of the optical molded body after the heating step, which is measured in accordance with ASTM E313-73, to the yellowness index YI₁ of the optical molded body before the heating step, which is measured in accordance with ASTM E313-73, is preferably 0.000 or more and 0.900 or less, more preferably 0.000 or more and 0.800 or less, still more preferably 0.000 or more and 0.700 or less, even still more preferably 0.000 or more and 0.650 or less, even still more preferably 0.000 or more and 0.600 or less, even still more preferably 0.000 or more and 0.500 or less, even still more preferably 0.000 or more and 0.400 or less, even still more preferably 0.000 or more and 0.350 or less, even still more preferably 0.000 or more and 0.300 or less, even still more preferably 0.000 or more and 0.250 or less, and even still more preferably 0.000 or more and 0.200 or less.

The yellowness index of the optical molded body can be more specifically measured according to the method described in Examples of the second embodiment.

The method for manufacturing an optical molded body according to the second embodiment preferably includes a step of molding the optical molded body by a method of forming an optical molded body, such as an injection molding method, a compression molding method, an injection compression molding method, an extrusion molding method, a solution casting method, or a casting method. From the viewpoint of improving the design freedom of the optical molded body, the method for manufacturing an optical molded body according to the second embodiment more preferably includes a step of molding the optical molded body by a casting method.

### [Photocurable resin composition]

In the second embodiment, the photocurable resin composition (hereinafter, also simply referred to as a "resin composition" as appropriate) is a photocurable resin composition that can be used for an optical molded body.

The photocurable resin composition contains, for example, a polymerizable compound. From the viewpoint of further reducing the coloration of the optical molded body, the polymerizable compound preferably contains a (meth)acrylate monomer (A).

The properties of the photocurable resin composition are not particularly limited. However, from the viewpoint of suitability for forming an optical molded body by molding using an injection method or a casting method, the photocurable resin composition is preferably in a liquid state.

Next, specific examples of the constitutional components of the photocurable resin composition will be described.

The photocurable resin composition may be composed of a polymerizable compound, or may contain a component other than the polymerizable compound. The photocurable resin composition may contain one or two or more selected from the group consisting of an antioxidant (B), a photopolymerization initiator (C), and a light stabilizer (D), which will be described later, as specific examples of other components.

### <Polymerizable compound>

The polymerizable compound may be a compound having a polymerizable functional group, and is preferably a compound having a radically polymerizable functional group. From the viewpoint of further reducing the coloration of the optical molded body, examples of the radically polymerizable functional group include a (meth)acryloyl group. From the viewpoint of further reducing the coloration of the optical molded body, the polymerizable compound preferably contains a (meth)acrylate monomer (A).

### <(Meth)acrylate monomer (A)>

The (meth)acrylate monomer (A) is a compound having a (meth)acryloyl group. The (meth)acrylate monomer (A) is a molecule capable of being bonded to other molecules by the radical polymerization of the (meth)acryloyl group.

From the viewpoint of improving the strength of the optical molded body obtained by the photocurable resin composition, the (meth)acrylate monomer (A) preferably contains one or two or more selected from the group consisting of a monofunctional (meth)acrylate monomer (A1) and a bifunctional or higher functional (meth)acrylate monomer (A2).

From the viewpoint of improving the crack resistance during the molding of the optical molded body and the viewpoint of further reducing the coloration of the optical molded body, in a case where the total content of the monofunctional (meth)acrylate monomer (A1) and the bifunctional or higher functional (meth)acrylate monomer (A2) is set to 100 parts by mass, the content of the bifunctional or higher functional (meth)acrylate monomer (A2) in the photocurable resin composition according to the second embodiment is preferably 5.0 parts by mass or more and 150 parts by mass or less, more preferably 10 parts by mass or more and 120 parts by mass or less, still more preferably 12 parts by mass or more and 100 parts by mass or less, even still more preferably 15 parts by mass or more and 90 parts by mass or less, even still more preferably 18 parts by mass or more and 70 parts by mass or less, even still more preferably 18 parts by mass or more and 50 parts by mass or less, even still more preferably 18 parts by mass or more and 40 parts by mass or less, and even still more preferably 18 parts by mass or more and 35 parts by mass or less.

From the viewpoint of further reducing the coloration of the optical molded body, the mass ratio of the content of the monofunctional (meth)acrylate monomer (A1) to the content of the bifunctional or higher functional (meth)acrylate monomer (A2) in the photocurable resin composition according to the second embodiment is preferably 0.50 or more and 10.0 or less, more preferably 1.00 or more and 8.00 or less, still more preferably 2.00 or more and 6.00 or less, even still more preferably 3.00 or more and 5.00 or less, and even still more preferably 3.50 or more and 4.50 or less.

### <Monofunctional (meth)acrylate monomer (A1)>

The monofunctional (meth)acrylate monomer (A1) includes, for example, one or two or more selected from the group consisting of an aromatic ring monofunctional (meth)acrylate; an alicyclic monofunctional (meth)acrylate; a chain (or chain-type) monofunctional (meth)acrylate such as a linear monofunctional (meth)acrylate (for example, including a monofunctional (meth)acrylate monomer having a linear hydrocarbon skeleton) and a branched monofunctional (meth)acrylate.

The monofunctional (meth)acrylate monomer (A1) preferably includes one or two or more selected from the group consisting of isobornyl (meth)acrylate, dicyclopentanyl (meth)acrylate (for example, GM81HDA, manufactured by Qualipoly Chemical Corporation), 3,3,5-trimethylcyclohexyl (meth)acrylate, 4-tert-butylcyclohexyl (meth)acrylate, dicyclopentenyl (meth)acrylate (for example, FA-511AS, manufactured by Hitachi Chemical Co., Ltd.), dicyclopentenyloxyethyl (meth)acrylate, tetrahydrofurfuryl (meth)acrylate, 2-hydroxyethyl (meth)acrylate, 4-hydroxybutyl (meth)acrylate, isobutyl (meth)acrylate, t-butyl (meth)acrylate, isooctyl (meth)acrylate, 2-methoxyethyl (meth)acrylate, methoxytriethylene glycol (meth)acrylate, 2-ethoxyethyl (meth)acrylate, 3-methoxybutyl (meth)acrylate, ethoxyethyl (meth)acrylate, butoxyethyl (meth)acrylate, ethoxydiethylene glycol (meth)acrylate, methoxydihexylethyl (meth)acrylate, ethyldiglycol (meth)acrylate, cyclic trimethylolpropane formal mono(meth)acrylate, imide (meth)acrylate, isoamyl (meth)acrylate, ethoxylated succinic acid (meth)acrylate, trifluoroethyl (meth)acrylate, ω-carboxypolycaprolactone mono(meth)acrylate, cyclohexyl (meth)acrylate, 2-(2-ethoxyethoxy)ethyl (meth)acrylate, stearyl (meth)acrylate, isostearyl (meth)acrylate (for example, S-1800A, manufactured by Shin-Nakamura Chemical Co., Ltd.), diethylene glycol monobutyl ether (meth)acrylate, lauryl (meth)acrylate (for example, LA, manufactured by OSAKA ORGANIC CHEMICAL INDUSTRY LTD.), isodecyl (meth)acrylate, octyl/decyl (meth)acrylate, tridecyl (meth)acrylate, caprolactone (meth)acrylate, ethoxylated (4) nonylphenol (meth)acrylate, methoxypolyethylene glycol (350) mono(meth)acrylate, methoxypolyethylene glycol (550) mono(meth)acrylate, phenoxyethyl (meth)acrylate, benzyl (meth)acrylate, methylphenoxyethyl (meth)acrylate, caprolactone-modified tetrahydrofurfuryl (meth)acrylate, tribromophenyl (meth)acrylate, ethoxylated tribromophenyl (meth)acrylate, 2-phenoxyethyl (meth)acrylate, an ethylene oxide adduct of 2-phenoxyethyl (meth)acrylate, a propylene oxide adduct of 2-phenoxyethyl (meth)acrylate, phenoxydiethylene glycol (meth)acrylate, 2-hydroxy-3-phenoxypropyl (meth)acrylate, 3-methacryloyloxymethylcyclohexene oxide, 3-(meth)acryloyloxymethylcyclohexene oxide, ethoxylated-o-phenylphenol (meth)acrylate (for example, A-LEN-10, manufactured by Shin-Nakamura Chemical Co., Ltd.), 2-methacryloyloxy-2-methyladamantane, and 2-methacryloyloxy-2-ethyladamantane.

From the viewpoint of further reducing the coloration of the optical molded body, the monofunctional (meth)acrylate monomer (A1) preferably includes one or two or more selected from the group consisting of lauryl (meth)acrylate and dicyclopentanyl (meth)acrylate.

From the viewpoint of further reducing the coloration of the optical molded body, the monofunctional (meth)acrylate monomer (A1) preferably has an alicyclic skeleton. From the viewpoint of further reducing the coloration of the optical molded body, the monofunctional (meth)acrylate monomer (A1) more preferably includes dicyclopentanyl (meth)acrylate, and still more preferably includes dicyclopentanyl methacrylate.

### <Bifunctional or higher functional (meth)acrylate monomer (A2)>

The bifunctional or higher functional (meth)acrylate monomer (A2) preferably includes one or two or more selected from the group consisting of an alicyclic bifunctional (meth)acrylate monomer and a linear bifunctional (meth)acrylate monomer.

The alicyclic bifunctional (meth)acrylate monomer is a bifunctional (meth)acrylate monomer having an alicyclic hydrocarbon structure in the molecular structure. From the viewpoint of improving heat resistance, the number of carbon atoms in the alicyclic hydrocarbon structure is preferably 4 or more and 14 or less, more preferably 5 or more and 12 or less, and still more preferably 6 or more and 10 or less.

The alicyclic hydrocarbon structure may be a saturated hydrocarbon structure or an unsaturated hydrocarbon structure. From the viewpoint of improving heat resistance, the alicyclic hydrocarbon structure is preferably a saturated hydrocarbon structure.

In addition, the alicyclic hydrocarbon structure may be a monocyclic hydrocarbon structure, or may be a polycyclic hydrocarbon structure such as a condensed ring-type hydrocarbon structure or a bridged hydrocarbon structure. The alicyclic bifunctional (meth)acrylate monomer may include a group having the alicyclic hydrocarbon structure in the molecular structure, and preferably includes a divalent group having the alicyclic hydrocarbon structure.

Specific examples of the monocyclic hydrocarbon group include a group having a cycloalkane structure, such as a cyclohexylene group and a cyclohexyl group; and a group having a cycloalkene skeleton, such as a cyclodecatrienediyl group and a cyclodecatrienyl group.

Specific examples of the polycyclic hydrocarbon group include a group having a dicyclopentadiene skeleton, such as a tricyclodecane diyl group, a dicyclopentanyl group, and a dicyclopentenyl group; a group having a norbornane skeleton, such as a norbornane diyl group, an isobornane diyl group, a norbornyl group, and an isobornyl group; and a group having an adamantane skeleton, such as an adamantane diyl group and an adamantyl group.

From the viewpoint of further reducing the coloration of the optical molded body, the cyclic hydrocarbon group in the alicyclic bifunctional (meth)acrylate monomer is preferably a group having a dicyclopentadiene skeleton.

In addition, from the viewpoint of reducing the curing shrinkage during the molding of the optical molded body, the alicyclic bifunctional (meth)acrylate monomer preferably includes tricyclodecane dimethanol di(meth)acrylate, more preferably is tricyclodecane dimethanol di(meth)acrylate, and still more preferably is tricyclodecane dimethanol dimethacrylate (for example, DCP, manufactured by Shin-Nakamura Chemical Co., Ltd.).

The linear bifunctional (meth)acrylate monomer is a (meth)acrylate having a linear structure in the molecular structure and having two (meth)acryloyl groups.

From the viewpoint of improving the crack resistance during the molding of the optical molded body, the linear structure preferably includes a divalent linear hydrocarbon group. From the viewpoint of reducing the deviation in the amount of liquid due to the volatilization of the monomer during the molding of the optical molded body, the number of carbon atoms in the divalent linear hydrocarbon group is, for example, 1 or more, preferably 2 or more, and more preferably 4 or more. In addition, from the viewpoint of improving heat resistance, the number of carbon atoms in the divalent linear hydrocarbon group is preferably 20 or less, and more preferably 14 or less.

Specific examples of the linear bifunctional (meth)acrylate monomer include a di(meth)acrylate of an alkanediol.

The linear bifunctional (meth)acrylate monomer preferably includes one or two or more selected from the group consisting of 1,6-hexanediol di(meth)acrylate (for example, A-HD-N, manufactured by Shin-Nakamura Chemical Co., Ltd.; HD-N, manufactured by Shin-Nakamura Chemical Co., Ltd.), 1,9-nonanediol di(meth)acrylate (for example, A-NOD-N, manufactured by Shin-Nakamura Chemical Co., Ltd.; Light Acrylate 1,9ND-A, manufactured by KYOEISHA CHEMICAL Co., Ltd.; NOD-N, manufactured by Shin-Nakamura Chemical Co., Ltd.; Light Acrylate 1,9-ND-M, manufactured by KYOEISHA CHEMICAL Co., Ltd.), 1,10-decanediol di(meth)acrylate (for example, A-DOD-N, manufactured by Shin-Nakamura Chemical Co., Ltd.; DOD-N, manufactured by Shin-Nakamura Chemical Co., Ltd.), 1,12-dodecanediol di(meth)acrylate (for example, DDD, manufactured by Shin-Nakamura Chemical Co., Ltd.; SR262, manufactured by Arkema S.A.), ethylene glycol di(meth)acrylate (for example, SR206NS, manufactured by Arkema S.A.), triethylene glycol di(meth)acrylate (for example, SR272, manufactured by Arkema S.A.), polyethylene glycol di(meth)acrylate (for example, A-400, manufactured by Shin-Nakamura Chemical Co., Ltd.), 1,3-butanediol di(meth)acrylate (for example, BG, manufactured by Shin-Nakamura Chemical Co., Ltd.), and 1,4-butanediol di(meth)acrylate (for example, BD, manufactured by Shin-Nakamura Chemical Co., Ltd.).

From the viewpoint of reducing the cracks generated in the optical molded body, the linear bifunctional (meth)acrylate monomer more preferably includes one or two or more (meth)acrylates selected from the group consisting of 1,12-dodecanediol di(meth)acrylate and 1,9-nonanediol di(meth)acrylate.

From the viewpoint of further reducing the coloration of the optical molded body, the bifunctional or higher functional (meth)acrylate monomer (A2) preferably has an alicyclic skeleton. From the viewpoint of further reducing the coloration of the optical molded body, the bifunctional or higher functional (meth)acrylate monomer (A2) more preferably includes tricyclodecane dimethanol di(meth)acrylate, and still more preferably includes tricyclodecane dimethanol dimethacrylate.

From the viewpoint of further reducing the coloration of the optical molded body, the bifunctional or higher functional (meth)acrylate monomer (A2) preferably has a linear hydrocarbon skeleton. From the viewpoint of further reducing the coloration of the optical molded body, the bifunctional or higher functional (meth)acrylate monomer (A2) more preferably includes 1,12-dodecanediol di(meth)acrylate, and still more preferably includes 1,12-dodecanediol dimethacrylate.

### <Antioxidant (B)>

The photocurable resin composition according to the second embodiment may further contain an antioxidant (B). The antioxidant (B) is not particularly limited, and a known antioxidant can be used. The antioxidant (B) includes, for example, one or two or more selected from the group consisting of a phenol-based antioxidant, a phosphorus-based antioxidant, a sulfur-based antioxidant, a hindered amine-based antioxidant, and a thioether-based antioxidant.

Examples of the phenol-based antioxidant include 2,6-di-t-butylhydroxytoluene and pentaerythritol tetrakis[3-(3,5-di-tert-butyl-4-hydroxyphenyl)propionate].

Examples of a commercially available product of the phenol-based antioxidant include ADEKA STAB series AO-20, AO-30, AO-40, AO-50, AO-60, and AO-80 manufactured by ADEKA Corporation.

Examples of the phosphorus-based antioxidant include phosphines such as trialkylphosphine and triarylphosphine, trialkyl phosphite, and triaryl phosphite.

Examples of a commercially available product of the phosphorus-based antioxidant include ADEKA STAB series PEP-4C, PEP-8, PEP-24G, PEP-36, HP-10, 260, 522A, 329K, 1178, 1500, 135A, and 3010 manufactured by ADEKA Corporation.

Examples of sulfur-based antioxidant include dilauryl 3,3-thiodipropionate, dimyristyl 3,3'-thiodipropionate, distearyl 3,3-thiodipropionate, lauryl stearyl 3,3-thiodipropionate, pentaerythritol-tetrakis-(β-lauryl-thio-propionate), 3,9-bis(2-dodecylthioethyl)-2,4,8,10-tetraoxaspiro[5,5]undecane, and the like.

Examples of the hindered amine-based antioxidant include bis(1,2,2,6,6-pentamethyl-4-piperidinyl)sebacate, methyl(1,2,2,6,6-pentamethyl-4-piperidinyl)sebacate, 2,4-bis[N-butyl-N-(1-cyclohexyloxy-2,2,6,6-tetramethylpiperidine-4-yl)amino]-6-(2-hydroxyethylamino)-1,3,5-triazine, decanedioic acid bis(2,2,6,6-tetramethyl-1-(octyloxy)-4-piperidinyl)ester, sebacic acid bis(1,2,2,6,6-pentamethyl-4-piperidyl), and the like.

Examples of a commercially available product of the hindered amine-based antioxidant include hindered amine-based antioxidants such as ADEKA STAB series AL-72 manufactured by ADEKA Corporation and TINUVIN series 111FDL, 123, 144, 152, 292, and 5100 manufactured by BASF.

Examples of the thioether-based antioxidant include 3,3'-thiobispropionic acid ditridecyl and bis[3-(dodecylthio)propionic acid] 2,2-bis[[3-(dodecylthio)-1-oxopropyloxy]methyl]-1,3-propanediyl.

Examples of a commercially available product of the thioether-based antioxidant include ADEKA STAB series AO-26, AO-412S, and AO-503A manufactured by ADEKA Corporation.

From the viewpoint of further reducing the coloration of the optical molded body, the antioxidant (B) preferably includes one or two or more selected from the group consisting of a phenol-based antioxidant and a thioether-based antioxidant. From the viewpoint of further reducing the coloration of the optical molded body, the antioxidant (B) more preferably includes one or two or more selected from the group consisting of bis[3-(dodecylthio)propionic acid] 2,2-bis[[3-(dodecylthio)-1-oxopropyloxy]methyl]-1,3-propanediyl (for example, ADEKA STAB AO-412S, manufactured by ADEKA Corporation) and pentaerythritol tetrakis[3-(3,5-di-tert-butyl-4-hydroxyphenyl)propionate] (for example, ADEKA STAB AO-60, manufactured by ADEKA Corporation).

From the viewpoint of further reducing the coloration of the optical molded body, the content of the antioxidant (B) in the photocurable resin composition of the second embodiment is preferably 0.010 parts by mass or more and 10 parts by mass or less, more preferably 0.050 parts by mass or more and 5.0 parts by mass or less, still more preferably 0.10 parts by mass or more and 3.0 parts by mass or less, even still more preferably 0.20 parts by mass or more and 2.0 parts by mass or less, and even still more preferably 0.50 parts by mass or more and 1.5 parts by mass or less with respect to 100 parts by mass of the (meth)acrylate monomer (A).

From the viewpoint of further reducing the coloration of the optical molded body, the content of the antioxidant (B) in the photocurable resin composition of the second embodiment is preferably 0.010% by mass or more and 5.0% by mass or less, more preferably 0.050% by mass or more and 4.0% by mass or less, still more preferably 0.10% by mass or more and 3.0% by mass or less, even still more preferably 0.50% by mass or more and 2.0% by mass or less, and even still more preferably 0.90% by mass or more and 1.0% by mass or less, in a case where the total amount of solid contents in the photocurable resin composition (the total amount of components remaining as solid substances in a case of being cured into a cured product) is set to 100% by mass.

### <Photopolymerization initiator (C)>

The photocurable resin composition of the second embodiment may further contain a photopolymerization initiator (C). The photopolymerization initiator (C) is not particularly limited, and a known polymerization initiator can be used.

From the viewpoint of stably forming the optical molded body at a low temperature, the photopolymerization initiator (C) preferably includes a photoradical polymerization initiator. The photoradical polymerization initiator is a compound that generates a radical upon irradiation with ultraviolet rays or visible light.

Examples of the photoradical polymerization initiator include an acylphosphine oxide-based initiator, an oxyphenylacetic acid ester-based initiator, a benzoylformic acid-based initiator, and a hydroxyphenyl ketone-based initiator.

Examples of the photopolymerization initiator (C) include benzophenone, Michler's ketone, 4,4'-bis(diethylamino)benzophenone, xanthone, thioxanthone, isopropylxanthone, 2,4-diethylthioxanthone, 2-ethylanthraquinone, acetophenone, 2-hydroxy-2-methyl-4'-isopropylpropionophenone, isopropylbenzoin ether, isobutylbenzoin ether, 2,2-diethoxyacetophenone, 2,2-dimethoxy-2-phenylacetophenone, camphorquinone, benzanthrone, ethyl 4-dimethylaminobenzoate, isoamyl 4-dimethylaminobenzoate, 4,4'-di(t-butylperoxycarbonyl)benzophenone, 3,4,4'-tri(t-butylperoxycarbonyl)benzophenone, 3,3',4,4'-tetra(t-butylperoxycarbonyl)benzophenone, 3,3',4,4'-tetra(t-hexylperoxycarbonyl)benzophenone, 3,3'-di(methoxycarbonyl)-4,4'-di(t-butylperoxycarbonyl)benzophenone, 3,4'-di(methoxycarbonyl)-4,3'-di(t-butylperoxycarbonyl)benzophenone, 4,4'-di(methoxycarbonyl)-3,3'-di(t-butylperoxycarbonyl)benzophenone, 2-(4'-methoxystyryl)-4,6-bis(trichloromethyl)-s-triazine, 2-(3',4'-dimethoxystyryl)-4,6-bis(trichloromethyl)-s-triazine, 2-(2',4'-dimethoxystyryl)-4,6-bis(trichloromethyl)-s-triazine, 2-(2'-methoxystyryl)-4,6-bis(trichloromethyl)-s-triazine, 2-(4'-pentyloxystyryl)-4,6-bis(trichloromethyl)-s-triazine, 4-[p-N,N-di(ethoxycarbonylmethyl)]-2,6-di(trichloromethyl)-s-triazine, 1,3-bis(trichloromethyl)-5-(2'-chlorophenyl)-s-triazine, 1,3-bis(trichloromethyl)-5-(4'-methoxyphenyl)-s-triazine, 2-(p-dimethylaminostyryl)benzoxazole, 2-(p-dimethylaminostyryl)benzothiazole, 2-mercaptobenzothiazole, 3,3'-carbonylbis(7-diethylaminocoumarin), 2-(o-chlorophenyl)-4,4',5,5'-tetraphenyl-1,2'-biimidazole, 2,2'-bis(2-chlorophenyl)-4,4',5,5'-tetrakis(4-ethoxycarbonylphenyl)-1,2'-biimidazole, 2,2'-bis(2,4-dichlorophenyl)-4,4',5,5'-tetraphenyl-1,2'-biimidazole, 2,2'-bis(2,4-dibromophenyl)-4,4',5,5'-tetraphenyl-1,2'-biimidazole, 2,2'-bis(2,4,6-trichlorophenyl)-4,4',5,5'-tetraphenyl-1,2'-biimidazole, 3-(2-methyl-2-dimethylaminopropionyl)carbazole, 3,6-bis(2-methyl-2-morpholinopropionyl)-9-n-dodecylcarbazole, bis(η5-2,4-cyclopentadiene-1-yl)-bis(2,6-difluoro-3-(1H-pyrrole-1-yl)-phenyl) titanium, 1-hydroxycyclohexylphenyl ketone, 2-hydroxy-2-methyl-1-phenyl-1-propanone, 1-[4-(2-hydroxyethoxy)-phenyl]-2-hydroxy-2-methyl-1-propanone, 2-hydroxy-1-{4-[4-(2-hydroxy-2-methyl-propionyl)-benzyl]phenyl}-2-methyl-1-propanone, 2-methyl-1-[4-(methylthio)phenyl]-2-morpholino-1-propanone, 2-(dimethylamino)-1-(4-morpholinophenyl)-2-benzyl-1-butanone, 2-(dimethylamino)-2-[(4-methylphenyl)methyl]-1-[4-(4-morpholinyl)phenyl]-1-butanone, oxy-phenyl-acetic acid 2-[2-oxo-2-phenyl-acetoxy-ethoxy]-ethyl ester, oxy-phenyl-acetic acid 2-[2-hydroxy-ethoxy]-ethyl ester, methyl benzoylformate, bis(2,4,6-trimethylbenzoyl)phenylphosphine oxide, 2,4,6-trimethylbenzoyldiphenylphosphine oxide, 2,4,6-trimethylbenzoyldiphenylphosphinic acid ester, 1-[4-(phenylthio)phenyl]-1,2-octanedione 2-(O-benzoyloxime), 1-[9-ethyl-6-(2-methylbenzoyl)-9H-carbazole-3-yl]-ethanone-1-(O-acetyloxime), and the like.

From the viewpoint of further reducing the coloration of the optical molded body, the photopolymerization initiator (C) preferably includes a hydroxyphenyl ketone-based initiator, and more preferably includes 1-hydroxycyclohexylphenyl ketone (for example, Omnirad 184, manufactured by IGM Resins B.V.).

From the viewpoint of improving the curability of the photocurable resin composition, the content of the photopolymerization initiator (C) in the photocurable resin composition of the second embodiment is preferably 0.10 parts by mass or more, more preferably 0.50 parts by mass or more, still more preferably 1.0 part by mass or more, even still more preferably 2.0 parts by mass or more, and even still more preferably 3.0 parts by mass or more with respect to 100 parts by mass of the (meth)acrylate monomer (A).

From the viewpoint of improving the uniformity of the thickness of the photocurable resin composition during curing, the content of the photopolymerization initiator (C) in the photocurable resin composition of the second embodiment is preferably 10 parts by mass or less, more preferably 8.0 parts by mass or less, still more preferably 6.0 parts by mass or less, even still more preferably 5.0 parts by mass or less, and even still more preferably 4.5 parts by mass or less with respect to 100 parts by mass of the (meth)acrylate monomer (A).

The content of the photopolymerization initiator (C) in the photocurable resin composition of the second embodiment is preferably 0.10 parts by mass or more and 10 parts by mass or less, more preferably 0.50 parts by mass or more and 8.0 parts by mass or less, still more preferably 1.0 part by mass or more and 6.0 parts by mass or less, even still more preferably 2.0 parts by mass or more and 5.0 parts by mass or less, and even still more preferably 3.0 parts by mass or more and 4.5 parts by mass or less with respect to 100 parts by mass of the (meth)acrylate monomer (A).

From the viewpoint of further reducing the coloration of the optical molded body, the content of the photopolymerization initiator (C) in the photocurable resin composition of the second embodiment is preferably 0.10% by mass or more and 10% by mass or less, more preferably 1.0% by mass or more and 8.0% by mass or less, still more preferably 2.0% by mass or more and 6.0% by mass or less, even still more preferably 3.0% by mass or more and 5.0% by mass or less, and even still more preferably 3.5% by mass or more and 4.0% by mass or less in a case where the total amount of the solid contents in the photocurable resin composition (the total amount of components remaining as solid substances in a case of being cured into a cured product) is set to 100% by mass.

### <Light stabilizer (D)>

The photocurable resin composition of the second embodiment may further include a light stabilizer (D). The light stabilizer (D) is not particularly limited, and a known light stabilizer can be used. The photocurable resin composition can improve the coloring resistance by containing the light stabilizer (D).

From the viewpoint of further improving the coloring resistance, the light stabilizer (D) preferably includes a hindered amine-based light stabilizer.

Examples of the hindered amine-based light stabilizer include methacrylic acid (1,2,2,6,6-pentamethyl-piperidin-4-yl), decanedioic acid bis(2,2,6,6-tetramethyl-1(octyloxy)-4-piperidinyl) ester, a reaction product of 1,1-dimethylethyl hydroperoxide and octane (70% by mass), and polypropylene (30% by mass), bis(1,2,2,6,6-pentamethyl-4-piperidyl)[[3,5-bis(1,1-dimethylethyl)-4-hydroxyphenyl]methyl]butylmalonate, a mixture of bis(1,2,2,6,6-pentamethyl-4-piperidyl)sebacate and methyl-1,2,2,6,6-pentamethyl-4-piperidyl sebacate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, a mixture of 2,2,6,6-tetramethyl-4-piperidyl-1,2,3,4-butanetetracarboxylate and tridecyl-1,2,3,4-butanetetracarboxylate, and a mixture of 1,2,2,6,6-pentamethyl-4-piperidyl-1,2,3,4-butanetetracarboxylate and tridecyl-1,2,3,4-butanetetracarboxylate.

From the viewpoint of further improving the coloring resistance, the light stabilizer (D) preferably includes 1,2,2,6,6-pentamethyl-4-piperidyl methacrylate (for example, ADEKA STAB LA-82, manufactured by ADEKA Corporation).

From the viewpoint of further reducing the coloration of the optical molded body, the content of the light stabilizer (D) in the photocurable resin composition of the second embodiment is preferably 0.0010% by mass or more, more preferably 0.0050% by mass or more, still more preferably 0.010% by mass or more, even still more preferably 0.050% by mass or more, and even still more preferably 0.090% by mass or more in a case where the total amount of the solid contents in the photocurable resin composition (the total amount of components remaining as solid substances in a case of being cured into a cured product) is set to 100% by mass.

From the viewpoint of reducing the bleeding-out, the content of the light stabilizer (D) in the photocurable resin composition of the second embodiment is preferably 1.00% by mass or less, more preferably 0.60% by mass or less, still more preferably 0.50% by mass or less, even still more preferably 0.40% by mass or less, and even still more preferably 0.30% by mass or less in a case where the total amount of the solid contents in the photocurable resin composition (the total amount of components remaining as solid substances in a case of being cured into a cured product) is set to 100% by mass.

From the viewpoint of further reducing the coloration of the optical molded body and the viewpoint of reducing the bleeding-out, the content of the light stabilizer (D) in the photocurable resin composition of the second embodiment is preferably 0.0010% by mass or more and 1.00% by mass or less, more preferably 0.0050% by mass or more and 0.60% by mass or less, still more preferably 0.010% by mass or more and 0.50% by mass or less, even still more preferably 0.050% by mass or more and 0.40% by mass or less, and even still more preferably 0.090% by mass or more and 0.30% by mass or less in a case where the total amount of the solid contents in the photocurable resin composition (the total amount of components remaining as solid substances in a case of being cured into a cured product) is set to 100% by mass.

### <Other components>

The photocurable resin composition may contain one or two or more selected from the group consisting of a filler, a curing accelerator, a plasticizer, a heat stabilizer, a flame retardant, an antistatic agent, an antifoaming agent, a silane coupling agent, an ultraviolet absorber, a surfactant, and a leveling agent as specific examples of other components other than the polymerizable compound (for example, the (meth)acrylate monomer (A)), the antioxidant (B), the photopolymerization initiator (C), and the light stabilizer (D).

### <Method for manufacturing photocurable resin composition>

The photocurable resin composition according to the second embodiment can be obtained by mixing the polymerizable compound (for example, the (meth)acrylate monomer (A)) and other components such as the antioxidant (B), the photopolymerization initiator (C), or the light stabilizer (D) as necessary by a known method in the related art.

### <Physical properties of photocurable resin composition>

Next, the physical properties of the photocurable resin composition will be described.

From the viewpoint of improving the heat resistance of the optical molded body, the glass transition temperature Tg of the photocurable resin composition of the second embodiment is preferably 100°C or higher, more preferably 110°C or higher, still more preferably 115°C or higher, even still more preferably 120°C or higher, even still more preferably 125°C or higher, and even further more preferably 130°C or higher.

From the viewpoint of further reducing the coloration of the optical molded body, the glass transition temperature Tg of the photocurable resin composition of the second embodiment is preferably 250°C or lower, more preferably 230°C or lower, still more preferably 210°C or lower, even still more preferably 190°C or lower, even still more preferably 170°C or lower, even still more preferably 150°C or lower, and even still more preferably 140°C or lower.

From the viewpoint of improving the heat resistance of the optical molded body and the viewpoint of further reducing the coloration of the optical molded body, the glass transition temperature Tg of the photocurable resin composition of the second embodiment is preferably 100°C or higher and 250°C or lower, more preferably 110°C or higher and 230°C or lower, still more preferably 115°C or higher and 210°C or lower, even still more preferably 120°C or higher and 190°C or lower, even still more preferably 125°C or higher and 170°C or lower, even still more preferably 130°C or higher and 150°C or lower, and even still more preferably 130°C or higher and 140°C or lower.

The glass transition temperature Tg of the photocurable resin composition of the second embodiment can be more specifically measured according to the method described in Examples.

### <Uses of photocurable resin composition>

Next, the uses of the photocurable resin composition will be described.

Since the photocurable resin composition of the second embodiment can reduce the coloration of the optical molded body produced by molding from the photocurable resin composition, the photocurable resin composition can be used in a method of forming an optical molded body, such as an injection molding method, a compression molding method, an injection compression molding method, an extrusion molding method, a solution casting method, and a casting method. In particular, the photocurable resin composition of the second embodiment can be used in a casting method.

Since the photocurable resin composition of the second embodiment can reduce the coloration of the optical molded body produced by molding from the photocurable resin composition, the use of the optical molded body produced by molding from the photocurable resin composition is not particularly limited, and the photocurable resin composition can be used for various uses.

The photocurable resin composition of the second embodiment can be used, for example, preferably for a lens. The lens includes, for example, one or two or more selected from the group consisting of a spherical lens, an aspherical lens, a biconvex lens, a flat-convex lens, a convex meniscus lens, a biconcave lens, a plano-concave lens, and a concave meniscus lens.

The photocurable resin composition of the second embodiment can be used, for example, more preferably for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The photocurable resin composition of the second embodiment can be used, for example, preferably for a cover for a display (hereinafter, also referred to as a cover display). The cover display includes, for example, one or two or more selected from the group consisting of a front surface cover display and a full-surface cover display.

The photocurable resin composition of the second embodiment can be used, for example, more preferably for one or two or more cover displays selected from the group consisting of a cover display for a virtual reality device (cover display for a VR device), a cover display for a mixed reality device (cover display for an MR device), a cover display for an augmented reality device (cover display for an AR device), a cover display for a cross-reality device (cover display for an xR device), and a cover display for a head-mounted display (cover display for an HMD).

### [Optical molded body]

The optical molded body of the second embodiment includes a cured product of the photocurable resin composition of the second embodiment. The optical molded body of the second embodiment can be manufactured using the photocurable resin composition of the second embodiment. The optical molded body can be manufactured from the photocurable resin composition of the second embodiment by any method such as an injection molding method, a compression molding method, an injection compression molding method, an extrusion molding method, a solution casting method, and a casting method.

The optical molded body of the second embodiment includes a lens. The lens includes, for example, one or two or more selected from the group consisting of a spherical lens, an aspherical lens, a biconvex lens, a flat-convex lens, a convex meniscus lens, a biconcave lens, a plano-concave lens, and a concave meniscus lens.

The lens of the second embodiment includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The optical molded body of the second embodiment includes a cover for a display (cover display). The cover display includes, for example, one or two or more selected from the group consisting of a front surface cover display and a full-surface cover display.

The cover display of the second embodiment includes one or two or more selected from the group consisting of a cover display for a virtual reality device (cover display for a VR device), a cover display for a mixed reality device (cover display for an MR device), a cover display for an augmented reality device (cover display for an AR device), a cover display for a cross-reality device (cover display for an xR device), and a cover display for a head-mounted display (cover display for an HMD).

The maximum thickness portion of the optical molded body is a portion of the optical molded body where the thickness of the optical member is maximum. The position of the maximum thickness portion of the optical molded body is not particularly limited, and can be appropriately set according to the use application and the like.

For example, in the optical molded body of the second embodiment, the maximum thickness portion is preferably 1.0 mm or more, the maximum thickness portion is more preferably 1.1 mm or more, the maximum thickness portion is still more preferably 1.2 mm or more, the maximum thickness portion is even still more preferably 1.5 mm or more, the maximum thickness portion is even still more preferably 2.0 mm or more, the maximum thickness portion is even still more preferably 3.0 mm or more, the maximum thickness portion is even still more preferably 4.0 mm or more, and the maximum thickness portion is even still more preferably 5.0 mm or more.

For example, in the optical molded body of the second embodiment, the maximum thickness portion is preferably 20.0 mm or less, the maximum thickness portion is more preferably 19.9 mm or less, the maximum thickness portion is still more preferably 19.8 mm or less, the maximum thickness portion is even still more preferably 19.5 mm or less, the maximum thickness portion is even still more preferably 18.0 mm or less, the maximum thickness portion is even still more preferably 17.0 mm or less, the maximum thickness portion is even still more preferably 16.0 mm or less, and the maximum thickness portion is even still more preferably 15.0 mm or less.

For example, in the optical molded body of the second embodiment, the maximum thickness portion is preferably 1.0 mm or more and 20.0 mm or less, the maximum thickness portion is more preferably 1.1 mm or more and 19.9 mm or less, the maximum thickness portion is still more preferably 1.2 mm or more and 19.8 mm or less, the maximum thickness portion is even still more preferably 1.5 mm or more and 19.5 mm or less, the maximum thickness portion is even still more preferably 2.0 mm or more and 19.0 mm or less, the maximum thickness portion is even still more preferably 3.0 mm or more and 18.0 mm or less, the maximum thickness portion is even still more preferably 4.0 mm or more and 17.0 mm or less, the maximum thickness portion is even still more preferably 5.0 mm or more and 16.0 mm or less, and the maximum thickness portion is even still more preferably 5.0 mm or more and 15.0 mm or less.

The photocurable resin composition of the second embodiment can reduce the coloration of the optical molded body, and thus can also be applied to an optical molded body having a thickness of 1.0 mm or more.

### (Optical device)

The optical device of the second embodiment includes the optical molded body of the second embodiment. The type of the optical device of the second embodiment is not particularly limited. Examples of the optical device of the second embodiment include a virtual reality device (VR device), a mixed reality device (MR device), an augmented reality device (AR device), a cross-reality device (xR device), and a head-mounted display (HMD device).

The second embodiment according to the present invention has been described above. However, these are examples of the present invention, and various configurations other than the above can be adopted.

In addition, the present invention is not limited to the second embodiments, and modifications, improvements, and the like within a range that does not impair the effects of the present invention are included in the present invention.

Although each embodiment of the present invention has been described above, these are merely examples of the present invention, and various configurations other than the above can also be adopted. In addition, the present invention is not limited to each of the above-described embodiments, and modifications, improvements, and the like within a range in which the object of the present invention can be achieved are included in the present invention.

In addition, a configuration in which the configurations of each of the above-described embodiments are combined is also included in the present invention.

### Examples

Hereinafter, each embodiment of the present invention will be described in detail with reference to Examples and the like. It is noted that each embodiment of the present invention is not limited to the description of these Examples.

### <<Examples 1A to 3A and Reference Example 1A>>

Hereinafter, the first embodiment of the present invention will be described in detail with reference to Examples 1A to 3A and Reference Example 1A. The first embodiment is not at all limited to the descriptions in these examples.

First, the materials used in Examples 1A to 3A and Reference Example 1A will be shown.
· Polymerizable compound: (meth)acrylate monomer (A)
   Monofunctional (meth)acrylate monomer (A1) 1: LA (lauryl acrylate, manufactured by OSAKA ORGANIC CHEMICAL INDUSTRY LTD.)
   Monofunctional (meth)acrylate monomer (A1) 2: GM81HDA (dicyclopentanyl methacrylate, manufactured by Qualipoly Chemical Corporation)
   Bifunctional or higher functional (meth)acrylate monomer (A2)1: DCP (tricyclodecane dimethanol dimethacrylate, manufactured by Shin-Nakamura Chemical Co., Ltd.)
   Bifunctional or higher functional (meth)acrylate monomer (A2)2: DDD (1,12-dodecanediol dimethacrylate, manufactured by Shin-Nakamura Chemical Co., Ltd.)
· Antioxidant (B)
   Antioxidant 1: Thioether-based antioxidant (bis[3-(dodecylthio)propionic acid]2,2-bis[[3-(dodecylthio)-1-oxopropyloxy]methyl]-1,3-propanediyl, manufactured by ADEKA Corporation, product name: ADEKA STAB AO-412S) (hereinafter, also referred to as AO-412S)
   Antioxidant 2: phenol-based antioxidant (pentaerythritol tetrakis[3-(3,5-di-tert-butyl-4-hydroxyphenyl)propionate], manufactured by ADEKA Corporation, product name: ADEKA STAB AO-60) (hereinafter, also referred to as AO-60)
· Photopolymerization initiator (C)
   Photopolymerization initiator 1: photoradical polymerization initiator (1-hydroxycyclohexyl phenyl ketone, manufactured by IGM Resins B.V., product name: Omnirad 184)
· Light stabilizer (D)
   Light stabilizer 1: hindered amine-based light stabilizer (methacrylic acid 1,2,2,6,6-pentamethyl-4-piperidyl, manufactured by ADEKA Corporation, product name: ADEKA STAB LA-82) (hereinafter, also referred to as LA-82)

### (Examples 1A to 3A and Reference Example 1A)

Each component was blended to have the blending composition shown in Table 1, thereby obtaining a liquid photocurable resin composition. The unit of the blending composition in Table 1 is parts by mass.

Physical properties of the photocurable resin composition or the cured product thereof obtained in each example were measured by the following methods. The measurement results are shown in Table 1.

### [Measurement of organic radical residual ratio R₁₀ in case of heating at 120°C for 10 minutes]

For the photocurable resin composition of each example, the organic radical residual ratio R₁₀ was calculated according to the following <method for calculating organic radical residual ratio (120°C, 10 minutes)>.

### <Method for calculating organic radical residual ratio (120°C, 10 minutes)>

The organic radical amount of the first cured film prepared according to the following <cured film preparation conditions> using the photocurable resin composition, which is measured according to the following <initial organic radical amount measurement>, was defined as an organic radical amount A₀.

In addition, the organic radical amount of the first cured film, which is measured according to the following <post-heating organic radical amount measurement (120°C, 10 minutes)>, was defined as an organic radical amount A₁.

The organic radical residual ratio R₁₀ was calculated by Expression (10) using the organic radical amount A₀ and the organic radical amount A₁. (10): $Organic radical residual ratio {R}_{10} \left(%\right) = 100 \times {A}_{1} / {A}_{0}$

### <Cured film preparation conditions>

A 3 mm-thick silicone sheet (material: silicone rubber, hardness: 50 degrees) having a circular hole with a diameter of 35 mmφ and a size of 50 mm × 50 mm was placed on a 0.7 mm-thick alkali-free glass (product name: JIS R 3202, glass plate surface, manufactured by Testpiece Co., Ltd.) having a size of 50 mm × 50 mm. The circular hole portion of the silicone sheet was filled with the photocurable resin composition, and then a 0.7 mm-thick alkali-free glass (product name: JIS R 3202, glass plate surface, manufactured by Testpiece Co., Ltd.) having a size of 50 mm × 50 mm was further placed thereon. At this time, it was confirmed that no air bubbles were present. Hereinafter, a laminate in which a silicone sheet is placed on the above-described alkali-free glass, the circular hole portion of the silicone sheet is filled with a photocurable resin, and then an alkali-free glass is further placed thereon may be referred to as a laminate.

The above-described laminate was placed on a stainless-steel lab jack, and the height of the stainless-steel lab jack was adjusted. From above the alkali-free glass, the photocurable resin composition was irradiated with LED light having a wavelength of 405 nm for 3 minutes under a condition of 810 mW using an LED light irradiation device (manufactured by CCS, product name: 405 nm-120 mm air-cooled batch type irradiation device, model number: HLDL-120505-NWPS). Thereafter, the laminate was turned over, and irradiation with LED light having a wavelength of 405 nm was further carried out for 3 minutes under a condition of 810 mW. After the irradiation with LED light, the laminate was allowed to cool at 23°C for 30 minutes. After cooling, the cured product of the photocurable resin composition was released from the alkali-free glass and the silicone sheet to obtain a cured film of the photocurable resin composition.

The irradiation intensity of the LED light was measured using an ultraviolet integrating actinometer (product name: UIT-250, manufactured by Ushio Inc.).

### <Initial organic radical amount measurement>

After completion of the LED light irradiation, the first cured film was placed in a polyethylene bag, and the first cured film was tapped and broken using a wooden mallet to obtain fragments of the first cured film within 1 hour or more and 2 hours or less. 7 mg of a first sample used for the measurement of the organic radical amount was collected from the fragments of the first cured film.

After 1 hour from the collection of the first sample, the organic radical amount A₀ at a measurement temperature of 23°C was measured by an electron spin resonance method (ESR) according to the following <ESR measurement conditions> using the first sample.

### <Post-heating organic radical amount measurement (120°C, 10 minutes)>

After the completion of the <initial organic radical amount measurement>, the temperature of an electron spin resonance device was raised to 120°C over 10 minutes in a state where the first sample is held inside the electron spin resonance device, the first sample was heated at 120°C for 10 minutes.

After the heating of the first sample, the organic radical amount A₁ at a measurement temperature of 120°C was measured by an electron spin resonance method (ESR) according to the following <ESR measurement conditions> using the first sample.

### <ESR measurement conditions>

Device: electron spin resonance device (manufactured by JEOL Ltd., product name: JES-TE200)
Resonance frequency: 9.2 GHz
Microwave input: 1 mW
Central magnetic field: 327.0 mT
Sweep width: ±15 mT
Modulation frequency: 100 kHz (modulation width: 1.0 mT)
Sweep time: 2 minutes
Time constant: 0.03 seconds
Sample tube: sample tube of tip portion quartz corresponding to X band
External standard: Mn²⁺ standard sample supported on magnesium oxide
External standard memory: 850.0
Measurement temperature: 23°C and 120°C
Measurement atmosphere: air
Sample: 7 mg

In the above-described Expression (10), a normalized organic radical amount A_{0S} shown in Expression (11) was used for the organic radical amount A₀. In addition, in the above-described Expression (10), a normalized organic radical amount A_{1S} shown in Expression (12) was used for the organic radical amount A₁. (11): 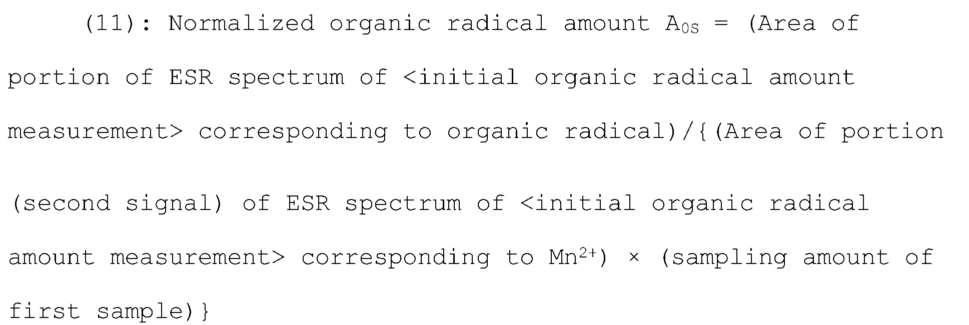 Normalized organic radical amount A0S = (Area of portion of ESR spectrum of <initial organic radical amount measurement> corresponding to organic radical)/{(Area of portion (second signal) of ESR spectrum of <initial organic radical amount measurement> corresponding to Mn2+) × (sampling amount of first sample)} (12): 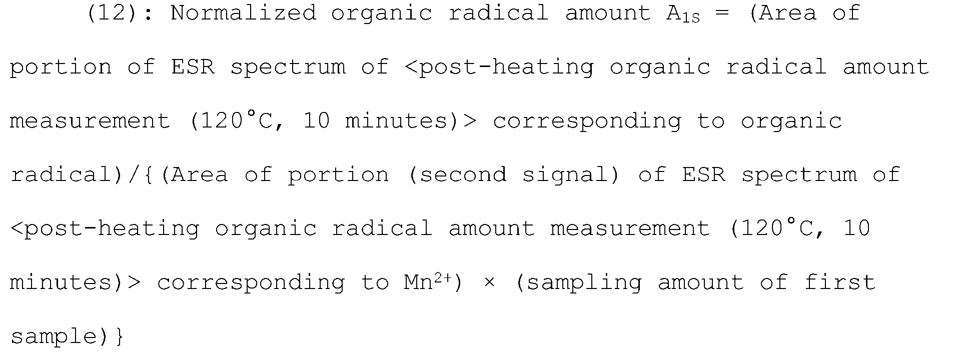 Normalized organic radical amount A1S = (Area of portion of ESR spectrum of <post-heating organic radical amount measurement (120°C, 10 minutes)> corresponding to organic radical)/{(Area of portion (second signal) of ESR spectrum of <post-heating organic radical amount measurement (120°C, 10 minutes)> corresponding to Mn2+) × (sampling amount of first sample)}

The baseline of the ESR spectrum was corrected based on Mn²⁺ (second signal).

Usually, in the relative comparison of radical amounts, Mn²⁺ (third signal) is used for the area of the reference Mn²⁺ derived signal. However, since the spectrum of the radical derived from the organic radical and Mn²⁺ (third signal) overlap, Mn²⁺ (second signal) was used for all the measurements this time (external standard memory = 850).

Further, when the organic radical-derived signal overlapped with Mn²⁺ (third signal), calculation was performed using the ESR spectrum of external standard memory = 0.

### [Measurement of organic radical residual ratio R₃₀ in case of heating at 120°C for 30 minutes]

For the photocurable resin composition of each example, the organic radical residual ratio R₃₀ was calculated according to the following <method for calculating organic radical residual ratio (120°C, 30 minutes)>.

### <Method for calculating organic radical residual ratio (120°C, 30 minutes)>

The organic radical amount of the second cured film prepared according to the <cured film preparation conditions> using the photocurable resin composition, which was measured according to the <initial organic radical amount measurement (second cured film)>, was defined as an organic radical amount A₂.

In addition, the organic radical amount of the second cured film, which is measured according to the following <post-heating organic radical amount measurement (120°C, 30 minutes)>, was defined as an organic radical amount A₃.

The organic radical residual ratio R₃₀ was calculated by Expression (13) using the organic radical amount A₂ and the organic radical amount A₃. (13): $Organic radical residual ratio {R}_{30} \left(%\right) = 100 \times {A}_{3} / {A}_{2}$

### <Initial organic radical amount measurement (second cured film)>

Within 2 hours after completion of the LED light irradiation, the second cured film was placed in a polyethylene bag, and the second cured film was tapped and broken using a wooden mallet to obtain fragments of the second cured film. 7 mg of a second sample used for the measurement of the organic radical amount was collected from the fragments of the second cured film.

After 1 hour from the collection of the second sample, the organic radical amount A₂ at a measurement temperature of 23°C was measured by an electron spin resonance method (ESR) according to the following <ESR measurement conditions> using the second sample.

### <Post-heating organic radical amount measurement (120°C, 30 minutes)>

After the completion of the <initial organic radical amount measurement (second cured film)>, the temperature of an electron spin resonance device was raised to 120°C over 10 minutes in a state where the second sample is held inside the electron spin resonance device, the second sample was heated at 120°C for 30 minutes.

After the heating of the second sample, the organic radical amount A₃ at a measurement temperature of 120°C was measured by an electron spin resonance method (ESR) according to the following <ESR measurement conditions> using the second sample.

In the above-described Expression (13), a normalized organic radical amount A_{2S} shown in Expression (14) was used for the organic radical amount A₂. In addition, in the above-described Expression (13), a normalized organic radical amount A_{3S} shown in Expression (15) was used for the organic radical amount A₃. (14): 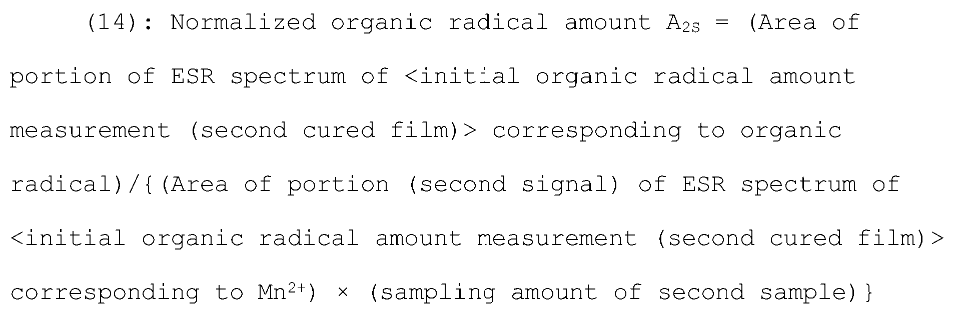 Normalized organic radical amount A2S = (Area of portion of ESR spectrum of <initial organic radical amount measurement (second cured film)> corresponding to organic radical)/{(Area of portion (second signal) of ESR spectrum of <initial organic radical amount measurement (second cured film)> corresponding to Mn2+) × (sampling amount of second sample)} (15): 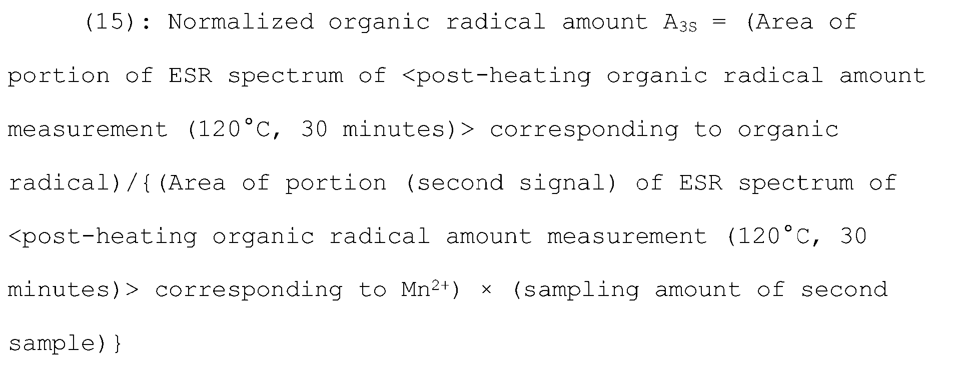 Normalized organic radical amount A3S = (Area of portion of ESR spectrum of <post-heating organic radical amount measurement (120°C, 30 minutes)> corresponding to organic radical)/{(Area of portion (second signal) of ESR spectrum of <post-heating organic radical amount measurement (120°C, 30 minutes)> corresponding to Mn2+) × (sampling amount of second sample)}

### [Measurement of YI Value]

In a case where the cured film of each example was heated at 120°C for 10 minutes or 30 minutes, the yellowness index (YI value) measured in accordance with ASTM E313-73 was measured. The measurement conditions were as shown in the following <measurement conditions of YI value>.

### <Measurement conditions of YI value>

Measuring device: Spectrocolor Haze Meter (product name: COH-7700, manufactured by Nippon Denshoku Industries Co., Ltd.)
Film thickness: 3 mm
Film diameter: 35 mmφ

The YI value in a case where the cured film was heated at 120°C for 10 minutes is referred to as YI₁₀, and the YI value in a case where the cured film was heated at 120°C for 30 minutes is referred to as YI₃₀.

### [Table 1]

**Table 1**

| | | | | | Example 1A | Example 2A | Example 3A | Reference Example 1A |
|---|---|---|---|---|---|---|---|---|
| Blending composition | (Meth)acrylate monomer | Monofunctional | Linear | LA | 0 | 0 | 20 | 0 |
| | | | Alicyclic | GM81HDA | 80 | 70 | 60 | 0 |
| | | Bifunctional or higher functional | Linear | DDD | 20 | 0 | 0 | 0 |
| | | | Alicyclic | DCP | 0 | 30 | 20 | 100 |
| | Antioxidant | | | AO-412S | 0.50 | 0.50 | 0.50 | 0.50 |
| | | | | AO-60 | 0.50 | 0.50 | 0.50 | 0.50 |
| | Photopolymerization initiator | | | Omnirad 184 | 4.0 | 4.0 | 4.0 | 4.0 |
| | Light stabilizer | | | LA-82 | 0.10 | 0.10 | 0.10 | 0.10 |
| Physical property | After heating at 120°C for 10 minutes, organic radical residual ratio R₁₀ [%] | | | | 0.00 | 2.60 | 0.00 | 23.40 |
| | After heating at 120°C for 30 minutes, organic radical residual ratio R₃₀ [%] | | | | 0.00 | 0.00 | 0.00 | 12.60 |
| | After heating at 120°C for 10 minutes, normalized organic radical amount A_{1S} | | | | 0.00 | 3.11 | 0.00 | 75.61 |
| | After heating at 120°C for 30 minutes, normalized organic radical amount A_{3S} | | | | 0.00 | 0.00 | 0.00 | 40.71 |
| | After heating at 120°C for 10 minutes, YI value YI₁₀ | | | | 1.60 | 5.11 | 0.78 | 8.83 |
| | After heating at 120°C for 30 minutes, YI value YI₃₀ | | | | 1.57 | 2.66 | 0.88 | 5.79 |

### <<Examples 1B to 8B and Comparative Example 1B to 2B>>

Hereinafter, a second embodiment of the present invention will be described in detail with reference to Examples 1B to 8B and Comparative Examples 1B and 2B. The second embodiment is not at all limited to the descriptions in these examples.

First, the materials used in each example are shown.
· Polymerizable compound: (meth)acrylate monomer (A)
   Monofunctional (meth)acrylate monomer (A1): GM81HDA (dicyclopentanyl methacrylate, manufactured by Qualipoly Chemical Corporation)
   Bifunctional or higher functional (meth)acrylate monomer (A2)1: DCP (tricyclodecane dimethanol dimethacrylate, manufactured by Shin-Nakamura Chemical Co., Ltd.)
   Bifunctional or higher functional (meth)acrylate monomer (A2)2: DDD (1,12-dodecanediol dimethacrylate, manufactured by Shin-Nakamura Chemical Co., Ltd.)
· Antioxidant (B)
   Antioxidant 1: Thioether-based antioxidant (bis[3-(dodecylthio)propionic acid]2,2-bis[[3-(dodecylthio)-1-oxopropyloxy]methyl]-1,3-propanediyl, manufactured by ADEKA Corporation, product name: ADEKA STAB AO-412S) (hereinafter, also referred to as AO-412S)
   Antioxidant 2: phenol-based antioxidant (pentaerythritol tetrakis[3-(3,5-di-tert-butyl-4-hydroxyphenyl)propionate], manufactured by ADEKA Corporation, product name: ADEKA STAB AO-60) (hereinafter, also referred to as AO-60)
· Photopolymerization initiator (C)
   Photopolymerization initiator 1: photoradical polymerization initiator (1-hydroxycyclohexyl phenyl ketone, manufactured by IGM Resins B.V., product name: Omnirad 184)
· Light stabilizer (D)
   Light stabilizer 1: hindered amine-based light stabilizer (methacrylic acid 1,2,2,6,6-pentamethyl-4-piperidyl, manufactured by ADEKA Corporation, product name: ADEKA STAB LA-82) (hereinafter, also referred to as LA-82)

### (Manufacturing Examples 1B to 2B)

Each component was blended to have the blending composition shown in Table 2, thereby obtaining a liquid photocurable resin composition. The unit of the blending composition in Table 2 is parts by mass.

Physical properties of the photocurable resin composition obtained in each manufacturing example were measured by the following methods. The measurement results are shown in Table 2.

### <Measurement of glass transition temperature Tg>

Using the photocurable resin composition of each manufacturing example, a cured film was prepared according to the following <cured film preparation conditions>. Using the cured film of each manufacturing example, the glass transition temperature Tg of the photocurable resin composition was measured according to the following <measurement method of glass transition temperature Tg>.

### <Cured film preparation conditions>

A PET film (no release treatment, manufactured by Teijin Ltd., product name: Merinax S) having a thickness of 100 µm and a size of 100 mm × 100 mm was placed on an alkali-free glass (product name: JIS R 3202, glass plate surface, manufactured by Testpiece Co., Ltd.) having a thickness of 2.0 mm and a size of 100 mm × 100 mm, and a PTFE sheet (material: PTFE, manufactured by Chukoh Chemical Industries, Ltd.) having a thickness of 100 µm and a size of 100 mm × 100 mm with a circular hole having a diameter of 70 mmφ was placed thereon. The circular hole portion of the PTFE sheet was filled with the photocurable resin composition, a PET film (no release treatment, manufactured by Teijin Ltd., product name: Merinax S) having a thickness of 100 µm and a size of 100 mm × 100 mm was placed thereon, and an alkali-free glass (product name: JIS R 3202, glass plate surface, manufactured by Testpiece Co., Ltd.) having a thickness of 2.0 mm and a size of 100 mm × 100 mm was further placed thereon. At this time, it was confirmed that no air bubbles were present, and the film was fixed at 8 locations with clips so that the thickness was uniform. Hereinafter, a laminate in which a PET film and a PTFE sheet are placed on the above-described alkali-free glass, the circular hole portion of the PTFE sheet is filled with a photocurable resin composition, and a PET film and an alkali-free glass are further placed thereon may be referred to as a laminate.

The above-described laminate was placed on a stainless-steel lab jack, and the height of the stainless-steel lab jack was adjusted. From above the alkali-free glass, the photocurable resin composition was irradiated with LED light having a wavelength of 405 nm for 5 minutes under a condition of 810 mW using an LED light irradiation device (manufactured by CCS, product name: 405 nm-120 mm air-cooled batch type irradiation device, model number: HLDL-120505-NWPS). Thereafter, the laminate was turned over, and irradiation with LED light having a wavelength of 405 nm was further carried out for 5 minutes under a condition of 810 mW. After the irradiation with LED light, the laminate was allowed to cool at 23°C for 30 minutes. After cooling, the cured product of the photocurable resin composition was released from the alkali-free glass, the PET film, and the PTFE sheet, and the laminate was further heated at 120°C for 1 hour as it was to obtain a cured film of the photocurable resin composition.

### <Measurement method of glass transition temperature Tg>

The cured film of each of the manufacturing examples was cut into a size of 10 mm in width × 45 mm in length, and a cured product having a thickness of 90 µm or more and 110 µm or less at a total of 4 points every 10 mm in the length direction was used as a test piece. Next, dynamic viscoelasticity measurement (DMA) was carried out using the obtained test piece. The measurement conditions were as shown in the following <DMA measurement conditions>.

The test piece of each of the manufacturing examples was measured in accordance with JIS K7244-4:1999. Specifically, dynamic viscoelasticity measurement was carried out using a dynamic viscoelasticity measuring device, and a storage elastic modulus E' and a loss elastic modulus E" were measured. Next, a loss tangent tanδ was calculated from the following Expression (16). (16): 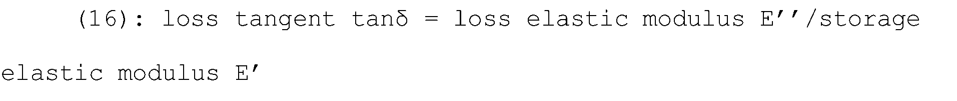 loss tangent tanδ = loss elastic modulus E"/storage elastic modulus E'

Finally, a temperature at which the loss tangent tanδ was maximum was defined as the glass transition temperature Tg.

### <DMA measurement conditions>

Measurement device: dynamic viscoelasticity measuring device (product name: DMS6100, manufactured by Seiko Instruments Inc.)
Frequency: 1 Hz
Temperature rising rate: 5 °C/min
Strain: 0.1%
Measurement mode: tensile mode
Distance between chucks: 20 mm
Sample width: 10 mm
Measurement atmosphere: atmospheric air

### (Examples 1B to 4B and Comparative Example 1B)

The manufacturing methods of Examples 1B to 4B and Comparative Example 1B were performed using the photocurable resin composition of Manufacturing Example 1B. In the manufacturing methods of Examples 1B to 4B and Comparative Example 1B, the curing step and/or the heating step was performed such that the contents of the manufacturing methods shown in Table 2 were obtained. An optical molded body was obtained in each example by the manufacturing methods of Examples 1B to 4B and Comparative Example 1B. Comparative Example 1B is an example in which the heating step was not performed.

### <Curing step>

A 3 mm-thick silicone sheet (material: silicone rubber, hardness: 50 degrees) having a circular hole with a diameter of 35 mmφ and a size of 50 mm × 50 mm was placed on a 0.7 mm-thick alkali-free glass (product name: JIS R 3202, glass plate surface, manufactured by Testpiece Co., Ltd.) having a size of 50 mm × 50 mm. The circular hole portion of the silicone sheet was filled with the photocurable resin composition, and then a 0.7 mm-thick alkali-free glass (product name: JIS R 3202, glass plate surface, manufactured by Testpiece Co., Ltd.) having a size of 50 mm × 50 mm was further placed thereon. At this time, it was confirmed that no air bubbles were present. Hereinafter, a laminate in which a silicone sheet is placed on the above-described alkali-free glass, the circular hole portion of the silicone sheet is filled with a photocurable resin, and then an alkali-free glass is further placed thereon may be referred to as a laminate.

The obtained laminate was placed on a stainless-steel lab jack, and the height of the stainless-steel lab jack was adjusted. From above the alkali-free glass, the photocurable resin composition was irradiated with LED light having a wavelength of 405 nm for 3 minutes under a condition of 810 mW using an LED light irradiation device (manufactured by CCS, product name: 405 nm-120 mm air-cooled batch type irradiation device, model number: HLDL-120505-NWPS). Thereafter, the laminate was turned over, and irradiation with LED light having a wavelength of 405 nm was further carried out for 3 minutes under a condition of 810 mW. After the irradiation with LED light, the laminate was allowed to cool at 23°C for 30 minutes. After the cooling, the cured product of the photocurable resin composition was released from the alkali-free glass and the silicone sheet to obtain an optical molded body in each example.

### <Heating step>

The optical molded body obtained in each example was heated under the conditions of the heating temperature and the heating time shown in Table 2, thereby performing the heating step of each example. A heating and drying machine was used for the heating step. The heating of the optical molded body of each example was started within 180 minutes after the preparing of the optical molded body of each example.

The optical molded body of Example 1B was put into a heating and drying machine at 120°C. After 10 minutes from putting the optical molded body of Example 1B into the heating and drying machine, the optical molded body of Example 1B was taken out from the heating and drying machine. Thereafter, the optical molded body of Example 1B was allowed to cool at 23°C for 30 minutes.

The optical molded body of Example 2B was put into a heating and drying machine at 120°C. After 30 minutes from putting the optical molded body of Example 2B into the heating and drying machine, the optical molded body of Example 2B was taken out from the heating and drying machine. Thereafter, the optical molded body of Example 2B was allowed to cool at 23°C for 30 minutes.

The optical molded body of Example 3B was put into a heating and drying machine at 120°C. After 60 minutes from putting the optical molded body of Example 3B into the heating and drying machine, the optical molded body of Example 3B was taken out from the heating and drying machine. Thereafter, the optical molded body of Example 3B was allowed to cool at 23°C for 30 minutes.

The optical molded body of Example 4B was put into a heating and drying machine at 140°C. After 60 minutes from putting the optical molded body of Example 4B into the heating and drying machine, the optical molded body of Example 4B was taken out from the heating and drying machine. Thereafter, the optical molded body of Example 4B was allowed to cool at 23°C for 30 minutes.

### (Examples 5B to 8B and Comparative Example 2B)

The manufacturing methods of Examples 5B to 8B and Comparative Example 2B were performed using the photocurable resin composition of Manufacturing Example 2B. In the manufacturing methods of Examples 5B to 8B and Comparative Example 2B, the curing step and/or the heating step was performed such that the contents of the manufacturing methods shown in Table 2 were obtained. An optical molded body was obtained in each example by the manufacturing methods of Examples 5B to 8B and Comparative Example 2B. Comparative Example 2B is an example in which the heating step was not performed.

The contents of the curing step and the heating step in the manufacturing methods of Examples 5B to 8B and Comparative Example 2B are the same as the contents of <curing step> and <heating step> described above.

### [Measurement of yellowness index (YI Value)]

For the optical molded body obtained in each example, the yellowness index (YI value) of the optical molded body, which was measured in accordance with ASTM E313-73, was measured. For the optical molded body obtained in each example, the yellowness index YI₁ before the heating step and the yellowness index YI₂ after the heating step were measured.

The measurement conditions of the yellowness index (YI value) were as shown in <measurement conditions of yellowness index (YI value)> below.

### [Measurement conditions of yellowness index (YI value)]

Measuring device: Spectrocolor Haze Meter (product name: COH-7700, manufactured by Nippon Denshoku Industries Co., Ltd.)
Thickness of test piece: 3 mm
Diameter of test piece: 35 mmφ

The test piece was prepared using the optical molded body obtained in each example.

After measuring the yellowness index YI₂ of the optical molded body obtained in each example after heating, the ratio of the yellowness index YI₂ after heating to the yellowness index YI₁ before heating was calculated according to Expression (17). (17): $Ratio of {YI}_{2} to {YI}_{1} = {YI}_{2} / {YI}_{1}$

### [Table 2]

**Table 2**

| Manufacturing Example | | | | Manufacturing Example 1B | | | | | Manufacturing Example 2B | | | | |
|---|---|---|---|---|---|---|---|---|---|---|---|---|---|
| Blending composition | (Meth)acrylate monomer | Monofunctional | GM81HDA | 80 | | | | | 0 | | | | |
| | | Bifunctional or higher functional | DDD | 20 | | | | | 0 | | | | |
| | | | DCP | 0 | | | | | 100 | | | | |
| | Antioxidant | | AO-412S | 0.50 | | | | | 0.50 | | | | |
| | | | AO-60 | 0.50 | | | | | 0.50 | | | | |
| | Photopolymerization initiator | | Omnirad 184 | 4.0 | | | | | 4.0 | | | | |
| | Light stabilizer | | LA-82 | 0.10 | | | | | 0.10 | | | | |
| Physical property | Glass transition temperature Tg [°C] | | | 134 | | | | | 209 | | | | |
| Example · Comparative Example | | | | Example 1B | Example 2B | Example 3B | Example 4B | Comparative Example 1B | Example 5B | Example 6B | Example 7B | Example 8B | Comparative Example 2B |
| Content of manufacturing method | Curing step | | | Present | Present | Present | Present | Present | Present | Present | Present | Present | Present |
| | Heating step | Heating temperature [°C] | | 120 | 120 | 120 | 140 | - | 120 | 120 | 120 | 140 | - |
| | | Heating time [minutes] | | 10 | 30 | 60 | 60 | | 10 | 30 | 60 | 60 | |
| Physical property | YI value before heating step | | | 6.62 | 6.62 | 6.62 | 6.62 | 6.62 | 13.80 | 13.80 | 13.80 | 13.80 | 13.80 |
| | YI value after heating step | | | 1.60 | 1.57 | 1.24 | 1.43 | - | 8.83 | 5.79 | 6.75 | 6.30 | - |
| | Ratio YI₂/YI₁ | | | 0.242 | 0.237 | 0.187 | 0.216 | - | 0.640 | 0.420 | 0.489 | 0.457 | - |

From Table 2, it can be understood that the manufacturing methods of Examples (Examples 1B to 8B) can reduce the coloration of the optical molded body as compared with the manufacturing methods of Comparative Examples (Comparative Examples 1B and 2B). That is, according to the manufacturing method of an optical molded body of the second embodiment, the coloration of the optical molded body can be reduced.

In addition, from Table 1, it can be understood that the photocurable resin compositions of Examples (Examples 1A to 3A) can further reduce the coloration of the optical molded body as compared with the photocurable resin composition of Reference Example (Reference Example 1A). That is, according to the photocurable resin composition of the first embodiment, the coloration of the optical molded body can be further reduced.

Priority is claimed based on Japanese Patent Application No. 2024-012839 and Japanese Patent Application No. 2024-012880 which are filed on January 31, 2024 and Japanese Patent Application No. 2024-069282 filed on April 22, 2024, the entire disclosure of which is incorporated herein.

## Claims

1. A photocurable resin composition capable of being used for an optical molded body,
wherein an organic radical residual ratio, which is calculated for the photocurable resin composition according to the following <method for calculating organic radical residual ratio>, is 20.0% or less.
<Method for calculating organic radical residual ratio>
An organic radical residual ratio is calculated by the following expression (1) using
an organic radical amount A₀ measured for a first cured film prepared using the photocurable resin composition according to the following <cured film preparation conditions> and measured according to the following <initial organic radical amount measurement>, and
an organic radical amount A₁ measured for the first cured film according to the following <post-heating organic radical amount measurement>. (1): $Organic radical residual ratio {R}_{10} \left(%\right) = 100 \times {A}_{1} / {A}_{0}$
<Cured film preparation conditions>
A 3 mm-thick silicone sheet (material: silicone rubber, hardness: 50 degrees) having a size of 50 mm × 50 mm and a circular hole with a diameter of 35 mmφ is placed on a 0.7 mm-thick alkali-free glass having a size of 50 mm × 50 mm, the circular hole portion is filled with the photocurable resin composition, a 0.7 mm-thick alkali-free glass having a size of 50 mm × 50 mm is further placed thereon, the resulting stack (laminate) is placed on a stainless-steel lab jack and the height is adjusted, the photocurable resin composition is irradiated with LED light having a wavelength of 405 nm for 3 minutes under a condition of 810 mW from above the alkali-free glass, the laminate is turned over, the photocurable resin composition is irradiated with LED light having a wavelength of 405 nm for 3 minutes under a condition of 810 mW, the laminate is allowed to cool at 23°C for 30 minutes, and a cured product of the photocurable resin composition is released from the alkali-free glass and the silicone sheet to obtain a cured film.
<Initial organic radical amount measurement>
A first sample is collected from the first cured film in an amount of 7 mg within 1 hour or more and 2 hours or less after the completion of the LED light irradiation, and
the organic radical amount A₀ at a measurement temperature of 23°C is measured by an electron spin resonance method (ESR) using the first sample according to the following <ESR measurement conditions> after 1 hour from the collection of the first sample.
<Post-heating organic radical amount measurement>
After the completion of the <initial organic radical amount measurement>, the temperature of an electron spin resonance device is raised to 120°C over 10 minutes in a state where the first sample is held inside the electron spin resonance device, the first sample is heated at 120°C for 10 minutes, and
the organic radical amount A₁ at a measurement temperature of 120°C is measured by the electron spin resonance method (ESR) using the first sample according to the following <ESR measurement conditions> after the heating of the first sample.
<ESR measurement conditions>
Device: electron spin resonance device
Resonance frequency: 9.2 GHz
Microwave input: 1 mW
Central magnetic field: 327.0 mT
Sweep width: ±15 mT
Modulation frequency: 100 kHz (modulation width: 1.0 mT)
Sweep time: 2 minutes
Time constant: 0.03 seconds
Sample tube: sample tube of tip portion quartz corresponding to X band
External standard: Mn²⁺ standard sample supported on magnesium oxide
External standard memory: 850.0
Measurement temperature: 23°C and 120°C
Measurement atmosphere: air
Sample: 7 mg

2. The photocurable resin composition according to Claim 1,
wherein in the <post-heating organic radical amount measurement>, the organic radical amount A₁ is a normalized organic radical amount A_{1S} calculated by Expression (2), and the normalized organic radical amount A_{1S} is 50.0 or less. (2): 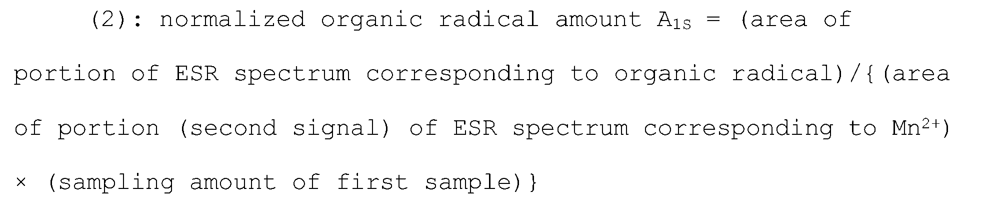 normalized organic radical amount A1S = (area of portion of ESR spectrum corresponding to organic radical)/{(area of portion (second signal) of ESR spectrum corresponding to Mn2+) × (sampling amount of first sample)}

3. The photocurable resin composition according to Claim 1 or 2,
wherein the photocurable resin composition contains one or two or more selected from the group consisting of a monofunctional (meth)acrylate monomer and a bifunctional or higher functional (meth)acrylate monomer.

4. The photocurable resin composition according to Claim 3,
wherein a content of the bifunctional or higher functional (meth)acrylate monomer is 5.0 parts by mass or more and 90 parts by mass or less in a case where a total content of the monofunctional (meth)acrylate monomer and the bifunctional or higher functional (meth)acrylate monomer is set to 100 parts by mass.

5. The photocurable resin composition according to Claim 3 or 4,
wherein a mass ratio of a content of the monofunctional (meth)acrylate monomer to a content of the bifunctional or higher functional (meth)acrylate monomer is 0.50 or more and 10.0 or less.

6. The photocurable resin composition according to any one of Claims 3 to 5,
wherein the monofunctional (meth)acrylate monomer has an alicyclic skeleton.

7. The photocurable resin composition according to any one of Claims 3 to 6,
wherein the bifunctional or higher functional (meth)acrylate monomer has an alicyclic skeleton.

8. The photocurable resin composition according to any one of Claims 3 to 7,
wherein the bifunctional or higher functional (meth)acrylate monomer has a linear hydrocarbon skeleton.

9. The photocurable resin composition according to any one of Claims 1 to 8,
wherein in a case where a cured film prepared according to the <cured film preparation conditions> using the photocurable resin composition is heated at 120°C for 10 minutes, a yellowness index (YI value) measured in accordance with ASTM E313-73 is 8.50 or less.

10. The photocurable resin composition according to any one of Claims 1 to 9,
wherein the photocurable resin composition further contains an antioxidant.

11. The photocurable resin composition according to any one of Claims 1 to 10,
wherein the photocurable resin composition further contains a photopolymerization initiator.

12. The photocurable resin composition according to Claim 11,
wherein the photopolymerization initiator includes a photoradical polymerization initiator.

13. The photocurable resin composition according to any one of Claims 1 to 12,
wherein the photocurable resin composition further contains a light stabilizer.

14. The photocurable resin composition according to any one of Claims 1 to 13,
wherein the photocurable resin composition is capable of being used in a casting method.

15. The photocurable resin composition according to any one of Claims 1 to 14,
wherein the photocurable resin composition is capable of being used for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

16. An optical molded body comprising a cured product of the photocurable resin composition according to any one of Claims 1 to 15.

17. The optical molded body according to Claim 16,
wherein the optical molded body includes a lens.

18. The optical molded body according to Claim 17,
wherein the lens includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

19. The optical molded body according to Claim 16,
wherein the optical molded body includes a cover display.

20. The optical molded body according to Claim 19,
wherein the cover display includes one or two or more selected from the group consisting of a cover display for a virtual reality device, a cover display for a mixed reality device, a cover display for an augmented reality device, a cover display for a cross-reality device, and a cover display for a head-mounted display.

21. The optical molded body according to any one of Claims 16 to 20,
wherein a maximum thickness portion is 20 mm or less.

22. The optical molded body according to any one of Claims 16 to 21,
wherein a maximum thickness portion is 1.0 mm or more.

23. A method for manufacturing an optical molded body, comprising:
a curing step of preparing an optical molded body by irradiating a photocurable resin composition with light to cure the photocurable resin composition; and
a heating step of reducing coloration of the optical molded body by heating the optical molded body.

24. The method for manufacturing an optical molded body according to Claim 23,
wherein a glass transition temperature of the photocurable resin composition is 100°C or higher.

25. The method for manufacturing an optical molded body according to Claim 23 or 24,
wherein in the heating step, a heating temperature for heating the optical molded body is 80°C or higher.

26. The method for manufacturing an optical molded body according to any one of Claims 23 to 25,
wherein in the heating step, a heating temperature for heating the optical molded body is lower than a glass transition temperature of the photocurable resin composition + 20°C.

27. The method for manufacturing an optical molded body according to any one of Claims 23 to 26,
wherein in the heating step, a heating time for heating the optical molded body is 1 minute or more.

28. The method for manufacturing an optical molded body according to any one of Claims 23 to 27,
wherein a ratio YI₂/YI₁ of a yellowness index YI₂ of the optical molded body after the heating step, which is measured in accordance with ASTM E313-73, to a yellowness index YI₁ of the optical molded body before the heating step, which is measured in accordance with ASTM E313-73, is 0.900 or less.

29. The method for manufacturing an optical molded body according to any one of Claims 23 to 28, further comprising:
a step of molding the optical molded body by a casting method.

30. The method for manufacturing an optical molded body according to any one of Claims 23 to 29,
wherein the photocurable resin composition contains one or two or more selected from the group consisting of a monofunctional (meth)acrylate monomer and a bifunctional or higher functional (meth)acrylate monomer.

31. The method for manufacturing an optical molded body according to Claim 30,
wherein in the photocurable resin composition, a content of the bifunctional or higher functional (meth)acrylate monomer is 5.0 parts by mass or more and 150 parts by mass or less in a case where a total content of the monofunctional (meth)acrylate monomer and the bifunctional or higher functional (meth)acrylate monomer is set to 100 parts by mass.

32. The method for manufacturing an optical molded body according to Claim 30 or 31,
wherein in the photocurable resin composition, a mass ratio of a content of the monofunctional (meth)acrylate monomer to a content of the bifunctional or higher functional (meth)acrylate monomer is 0.50 or more and 10.0 or less.

33. The method for manufacturing an optical molded body according to any one of Claims 30 to 32,
wherein the monofunctional (meth)acrylate monomer has an alicyclic skeleton.

34. The method for manufacturing an optical molded body according to any one of Claims 30 to 33,
wherein the bifunctional or higher functional (meth)acrylate monomer has an alicyclic skeleton.

35. The method for manufacturing an optical molded body according to any one of Claims 30 to 34,
wherein the bifunctional or higher functional (meth)acrylate monomer has a linear hydrocarbon skeleton.

36. The method for manufacturing an optical molded body according to any one of Claims 23 to 35,
wherein the photocurable resin composition further contains a photopolymerization initiator.

37. The method for manufacturing an optical molded body according to Claim 36,
wherein the photopolymerization initiator contains a photoradical polymerization initiator.

38. The method for manufacturing an optical molded body according to any one of Claims 23 to 36,
wherein the optical molded body includes a lens.

39. The method for manufacturing an optical molded body according to Claim 38,
wherein the lens includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

40. The method for manufacturing an optical molded body according to any one of Claims 23 to 39,
wherein a maximum thickness portion of the optical molded body is 20 mm or less.

41. The method for manufacturing an optical molded body according to any one of Claims 23 to 40,
wherein a maximum thickness portion of the optical molded body is 1.0 mm or more.
